(19) **Europäisches Patentamt**
**European Patent Office**
**Office européen des brevets**

(11) **EP 4 546 028 A1**

(12) **EUROPEAN PATENT APPLICATION**
published in accordance with Art. 153(4) EPC

(43) Date of publication:
**30.04.2025  Bulletin 2025/18**

(21) Application number: **22948020.7**

(22) Date of filing: **24.06.2022**

(51) International Patent Classification (IPC):
***G02B 21/00*** *(2006.01)*

(52) Cooperative Patent Classification (CPC):
**G02B 21/00**

(86) International application number:
**PCT/JP2022/025272**

(87) International publication number:
**WO 2023/248459 (28.12.2023 Gazette 2023/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NIKON CORPORATION**
**Tokyo 140-8601 (JP)**

(72) Inventors:
• **IKEDA, Satoshi**
**Tokyo 108-6290 (JP)**
• **FUKUTAKE, Naoki**
**Tokyo 108-6290 (JP)**

(74) Representative: **Hoffmann Eitle**
**Patent- und Rechtsanwälte PartmbB**
**Arabellastraße 30**
**81925 München (DE)**

(54) **MICROSCOPE DEVICE AND DATA GENERATION METHOD**

(57)     A microscope device (1) comprises: a first microscope part (10) that irradiates a sample (SA) with a first illumination light toward a first direction and detects light from the sample (SA) in response to the irradiation with the first illumination light; a second microscope part (50) that irradiates the sample (SA) with a second illumination light toward a second direction and detects light from the sample (SA) in response to the irradiation with the second illumination light, the second direction being different from the first direction; and a data processing part that generates a three-dimensional refractive index distribution on the sample based on a detection signal for the light detected by the first microscope part (10) and a detection signal for the light detected by the second microscope part (50).

FIG.1

EP 4 546 028 A1

**Description**

TECHNICAL FIELD

The present invention relates to a microscope device and a data generation method.

TECHNICAL BACKGROUND

In recent years, a method has been devised which acquires a three-dimensional refractive index distribution on a sample such as a phase object (see Patent Literature 1, for example).

PRIOR ARTS LIST

PATENT DOCUMENT

Patent literature 1: International Publication No. WO 2020-161826 Pamphlet

SUMMARY OF THE INVENTION

A microscope device according to the present invention comprises: a first microscope part that irradiates a sample with a first illumination light toward a first direction and detects light from the sample in response to the irradiation with the first illumination light; a second microscope part that irradiates the sample with a second illumination light toward a second direction and detects light from the sample in response to the irradiation with the second illumination light, the second direction being different from the first direction; and a data processing part that generates a three-dimensional refractive index distribution on the sample based on a detection signal for the light detected by the first microscope part and a detection signal for the light detected by the second microscope part.

A data generation method according to the present invention comprises the steps of: irradiating a sample with a first illumination light toward a first direction and detecting light from the sample in response to the irradiation with the first illumination light; irradiating the sample with a second illumination light toward a second direction and detecting light from the sample in response to the irradiation with the second illumination light, the second direction being different from the first direction; and generating a three-dimensional refractive index distribution on the sample based on a detection signal for light from the sample in response to the irradiation with the first illumination light and a detection signal for light from the sample in response to the irradiation with the second illumination light.

BRIEF DESCRIPTION OF THE DRAWINGS

FIG. 1 is a schematic view of a microscope device according to a first embodiment;
FIG. 2 is a schematic configuration diagram showing the microscope device according to the first embodiment;
FIG. 3 is an enlarged view of a stage according to the first embodiment;
FIG. 4 is a graph showing a distribution of light transmittance of a modulation element;
FIG. 5 is a schematic view showing a method by which deconvolution is performed based on image data on a plurality of cross-sectional surfaces of a sample;
FIG. 6 is a diagram showing an image of a sample through bright-field observation, which is generated by a conventional method;
FIG. 7 is a diagram showing an image of a refractive index distribution of a sample, which is generated by a conventional method;
FIG. 8 is a diagram showing a distribution of POTF in the past;
FIG. 9 is a diagram showing a distribution of a spectrum complemented by estimating a missing cone region of POTF in the past;
FIG. 10 is a diagram showing an image of a sample through bright-field observation;
FIG. 11 is a diagram showing an image of a refractive index distribution of a sample;
FIG. 12 is a diagram showing a distribution of POTF;
FIG. 13 is a diagram showing a distribution of a spectrum POTF complemented by estimating a missing cone region of POTF;
FIG. 14 is a flowchart illustrating a data generation method according to a first embodiment;
FIG. 15 is a schematic configuration diagram showing a variation example of the microscope device according to the first embodiment;

FIG. 16 is a schematic configuration diagram showing the microscope device according to a second embodiment;

FIG. 17 is an enlarged view of a stage according to the second embodiment;

FIG. 18 is a schematic configuration diagram showing a variation example of the microscope device according to the second embodiment;

FIG. 19 is a schematic configuration diagram showing the microscope device according to a third embodiment;

FIG. 20 is an enlarged view of a stage according to the third embodiment;

FIG. 21 is a schematic configuration diagram showing a variation example of the microscope device according to the third embodiment;

FIG. 22 is a schematic view of a microscope device according to a fourth embodiment;

FIG. 23 is a schematic configuration diagram showing the microscope device according to the fourth embodiment;

FIG. 24 is an enlarged view of a stage according to the fourth embodiment;

FIG. 25 is a schematic view of a microscope device according to a fifth embodiment;

FIG. 26 is a schematic view of a microscope device according to a sixth embodiment; and

FIG. 27 is a schematic configuration diagram showing a first microscope part according to a variation example.

DESCRIPTION OF THE EMBODIMENTS

A microscope device according to each of embodiments is described below. For easy understanding of features, the figures to be referred for the following description may include enlarged views of components for convenience, and the ratios of dimensions of each of the components, or the like are not limited to be equal to the actual dimensions thereof.

<First Embodiment>

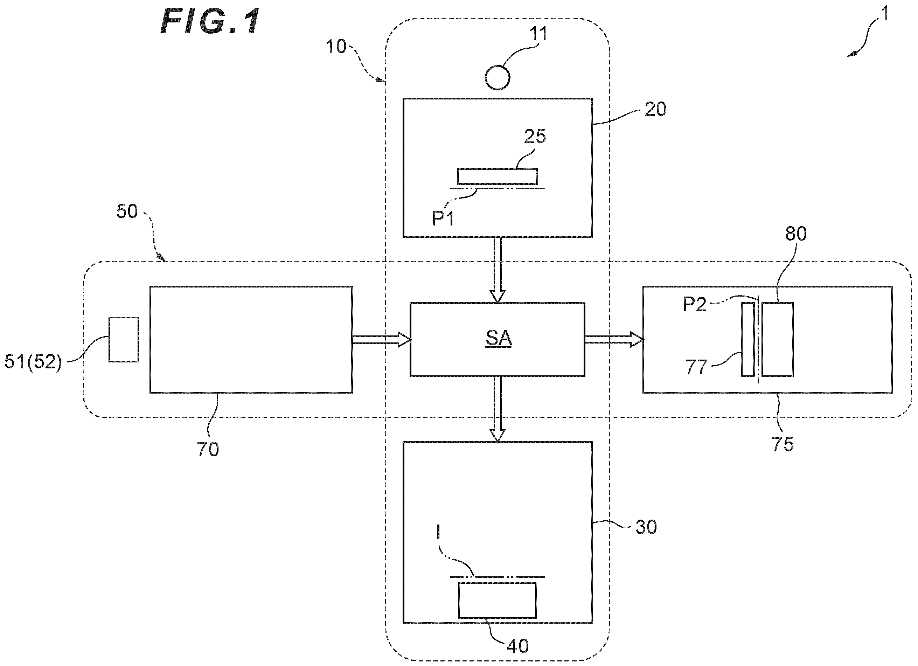

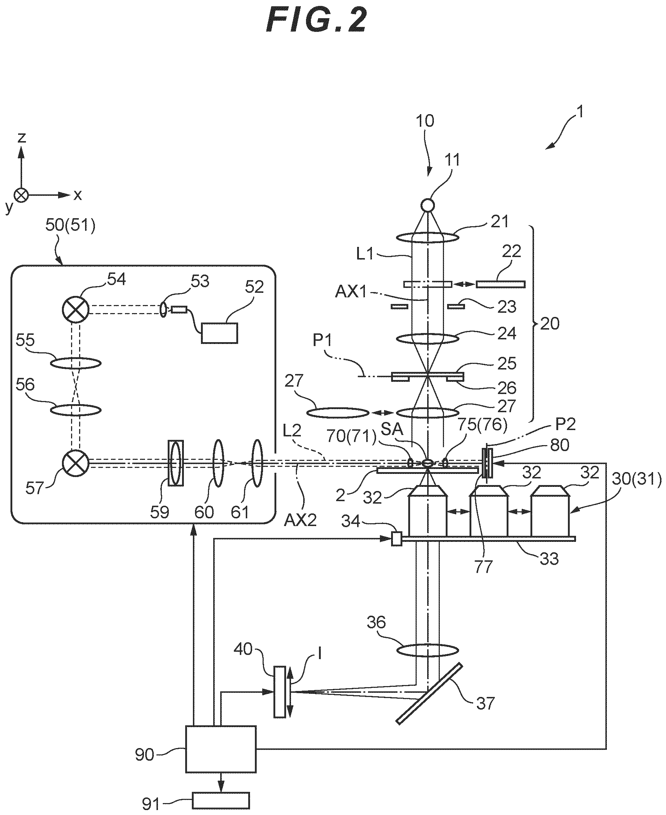

First of all, with reference to FIGS. 1 and 2, a microscope device 1 according to a first embodiment is described. As shown in FIGS. 1 and 2, the microscope device 1 according to the first embodiment has a first microscope part 10 and a second microscope part 50. The microscope device 1 further has a stage 2, a control part 90, and an image processing part 91, as shown in FIG. 2. The stage 2 supports a sample SA; The sample SA is a phase object such as a cell, for example. A stage drive part (not shown) is provided in the stage 2. The stage drive part causes the stage 2 to move along an optical axis AX1 of the first microscope part 10.

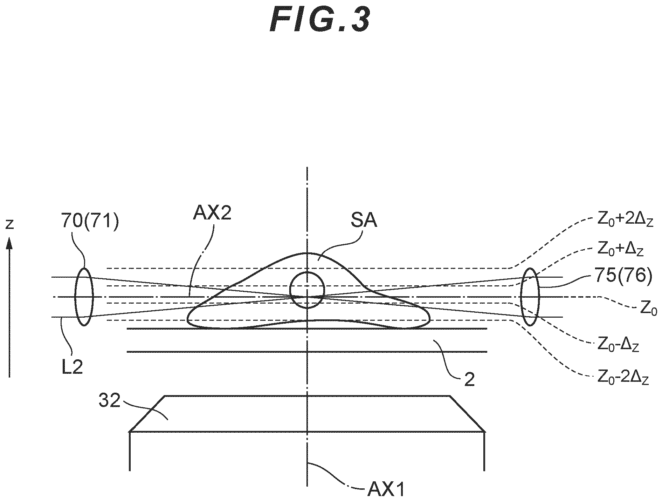

As shown in FIG. 2, it is assumed that the coordinate axis extending in the optical axis direction (top-bottom direction) of the first microscope part 10 is a z axis, and coordinate axes perpendicular to the z axis are an x axis and a y axis. By moving the stage 2 in the z direction by the stage drive part, image data of a cross-sectional surface of the sample SA at a predetermined position $Z_0$, a position $Z_0+\Delta z$ away from the position $Z_0$ by $+\Delta z$, a position $Z_0-\Delta z$ away from the position $Z_0$ by $-\Delta z$, a position $Z_0+2\Delta z$ away from the position $Z_0$ by $+2\Delta z$, a position $Z_0-2\Delta z$ away from the position $Z_0$ by $-2\Delta z$ ... can be acquired as shown in FIG. 3.

The first microscope part 10 has, as shown in FIGS. 1 and 2, a first light source 11, a first illumination optical system 20, a first detection optical system 30, and a first detector 40. The first light source 11 is formed by using a white light source such as a halogen lamp or a light emitting diode (LED). Alternatively, the first light source 11 may be formed by using a near-infrared light source such as a halogen lamp or an LED. The first light source 11 generates illumination light (hereinafter, called "a first illumination light ") having a predetermined wavelength band.

The first illumination optical system 20 directs a first illumination light L1 emitted from the first light source 11 toward the -z direction (first direction) and irradiates the sample SA. The first illumination optical system 20, has, in order from the first light source 11 side, a collector lens 21, an aperture stop 23, a relay lens 24, a first modulation element 25, an aperture stop 26, and a condenser lens 27, as shown in FIG. 2. In a case where a white light source is used as the first light source 11, it is preferable that an element that narrows the wavelength band of the first illumination light is provided. For example, a band pass filter 22 having a predetermined spectral transmittance characteristic may be introduced to an optical path between the collector lens 21 and the aperture stop 23 in the first illumination optical system 20 so that the wavelength band of the first illumination light can be narrowed. The narrowed wavelength band of the first illumination light can increase the accuracy of calculated values such as a POTF the details of which are described below. The spectral transmittance characteristic of the band pass filter 22 is set based on the wavelength band of illumination light depending on the application of observation such as bright-field observation. It should be noted that the band pass filter 22 may be introduced to an optical path between the aperture stop 23 and the relay lens 24 in the first illumination optical system 20.

The first modulation element 25 and the aperture stop 26 are arranged on a surface perpendicular to the optical axis AX1 of the first microscope part 10 (first illumination optical system 20) at a position P1 of a pupil (which may be called "illumination pupil" hereinafter) between the relay lens 24 and the condenser lens 27 in the first illumination optical system 20. The first modulation element 25 is arranged neighboring to the aperture stop 26 (above the aperture stop 26 as shown in FIG. 2 by way of example) . The surface perpendicular to the optical axis AX1 of the first microscope part 10 at the position P1 of the illumination pupil is called a "surface of the illumination pupil". As an example, the first modulation element 25 is a plate having light permeability wherein the light transmittance changes within a surface of the plate. This plate is formed by, for example, evaporating, to a parallel plate such as a glass substrate, a (light-shielding) film that allows the light transmittance to be reduced. As an example, a metallic film may be evaporated. For example, by changing the film thickness depending on the region of the parallel plate to which the film is to be evaporated, the light transmittance can be changed depending on the region of the parallel plate (as the film thickness increases, the transmittance decreases). By arranging this first modulation element 25 on the surface of the illumination pupil, the light transmittance can be changed within the surface of the illumination pupil. Thus, it can be said that the light transmittance in the first modulation element 25 changes within the surface of the illumination pupil. The light transmittance of the first modulation element 25 changes continuously (or discretely) within the surface of the illumination pupil.

It should be noted that the distribution of the light transmittance of the first modulation element 25 (in other words, the distribution of the light transmittance on the surface of the illumination pupil) depends on the change in light transmittance depending on the region of the first modulation element 25. As the first modulation element 25, any one of a plurality of the first modulation elements 25 having different changes in light transmittance, that is, different distributions of light transmittance may be selected and be arranged at the position P1 of the illumination pupil. Details of the light transmittance of the first modulation element 25 are described below. It should be noted that the position where the first modulation element 25 is placed is not limited to the position P1 on the illumination pupil. For example, the first modulation element 25 may be arranged on a surface perpendicular to the optical axis AX1 at a conjugated position to the illumination pupil (in other words, the conjugated surface to the illumination pupil). Also, the first light source 11 is arranged at a conjugated position to the illumination pupil.

The condenser lens 27 is arranged facing to an upper side of the stage 2. As the condenser lens 27, any one of a plurality of the condenser lenses 27 having different optical properties may be selected and be arranged above the stage 2.

The first detection optical system 30 receives light from the sample SA in response to the irradiation with the first illumination light L1 from the opposite side of the first illumination optical system 20 across the sample SA. As shown in FIG. 2, the first detection optical system 30 has, in order from the sample SA side, an objective lens unit 31, an image-forming lens 36, and a mirror 37. The objective lens unit 31 has a plurality of first objective lenses 32, a lens holding part 33, and a unit drive part 34. The first objective lens 32 is arranged facing to a lower side of the stage 2. The lens holding part 33 holds the plurality of first objective lenses 32 having different focal lengths. The lens holding part 33 is formed by using a revolver, turret or the like, for example. The unit drive part 34 may drive the lens holding part 33 and select any one of the plurality of first objective lenses 32 and place it under the stage 2. It should be noted that the unit drive part 34 may move the lens holding part 33 along the z axis. In this case, the aforementioned stage drive part may be additionally used, or no stage drive may be used.

Light from the sample SA in response to the irradiation with the first illumination light enters the first objective lens 32 placed under the stage 2. The light having transmitted through the first objective lens 32 enters the image-forming lens 36. The light having transmitted through the image-forming lens 36 is reflected by the mirror 37 and forms an image on a predetermined image surface I. Here, the position of the predetermined image surface I is a conjugated position to the focal position of the first objective lens 32 in the sample SA. It should be noted that a half mirror may be provided instead of the mirror 37, and an observation optical system (not shown) may be provided which has an eye-piece (not shown) on an optical path of light transmitting through the half mirror. Thus, the observer can observe an image of the sample SA by employing the eye-piece.

A first detector 40 is arranged on the image surface I of the first detection optical system 30. The first detector 40 is formed by using an imaging device such as a charge coupled device (CCD), a complementary metal oxide semiconductor (CMOS). The first detector 40 detects light from the sample SA through the first detection optical system 30.

The second microscope part 50 has, as shown in FIGS. 1 and 2, a light source unit 51, a second illumination optical system 70, a second detection optical system 75, and a second detector 80. The light source unit 51 is also called a "beam steering unit". The light source unit 51 has, as shown in FIG. 2, a second light source 52, a first lens 53, a first galvano mirror 54, a second lens 55, a third lens 56, a second galvano mirror 57, a liquid lens 59, a fourth lens 60, and a fifth lens 61. The light source unit 51 further has a detachable cylindrical lens (not shown) on an optical path between the first lens 53 and the first galvano mirror 54.

The second light source 52 is formed by using a laser light source. The second light source 52 generates illumination light (hereinafter, called "a second illumination light") having a predetermined wavelength band. The first lens 53 causes the second illumination light emitted from the second light source 52 to be parallel. The first galvano mirror 54 reflects the second illumination light from the first lens 53 toward the second lens 55. The first galvano mirror 54 may change the orientation of the reflective surface so that the direction of travel of the second illumination light can be changed. The first galvano mirror 54 may change the direction of travel of the second illumination light so that the light-gathering position for the second illumination light on the sample SA can be changed to the y direction. The second lens 55 and the third lens 56 cause the second illumination light reflected by the first galvano mirror 54 to enter the second galvano mirror 57. It should be noted that, in a case where the first galvano mirror 54 and the second galvano mirror 57 are arranged at conjugated positions to the pupil, the second lens 55 and the third lens 56 may not be provided.

The second galvano mirror 57 reflects the second illumination light from the third lens 56 toward the liquid lens 59. The second galvano mirror 57 may change the orientation of the reflective surface so that the direction of progression of the second illumination light can be changed. The second galvano mirror 57 changes the direction of travel of the second illumination light so that the light-gathering position for the second illumination light on the sample SA is changed to the z direction.

The liquid lens 59 may change the radius of curvature of the lens surface so that the focal length of the liquid lens 59 can be changed. When the liquid lens 59 changes the focal length of the liquid lens 59, the light-gathering position for the second illumination light on the sample SA can be changed to the x direction. The fourth lens 60 and the fifth lens 61 cause the second illumination light having transmitted through the liquid lens 59 to enter the second illumination optical system 70. By changing the light-gathering position for the second illumination light on sample SA with the first galvano mirror 54, the second galvano mirror 57 and the liquid lens 59 in the three-dimensional directions (three directions of the x direction, y direction, and the z direction), the sample SA can be three-dimensionally scanned.

It should be noted that, from deconvolution viewpoint, the irradiation range of the first illumination light by the first illumination optical system 20 (three-dimensional observation range on the sample SA) and the irradiation range of the second illumination light by the second illumination optical system 70 (three-dimensional observation range on the sample SA) are preferably adjusted in advance so as to be matched. The adjustment for matching the irradiation ranges of the first illumination light and second illumination light (observation range) may be achieved by, for example, controlling the oscillation angle of at least one of first galvano mirror 54 and second galvano mirror 57 in the light source unit 51. Alternatively, a common irradiation range (observation range) between the first illumination light and the second illumination light may be identified so that image construction can be achieved with three-dimensional scanning on the sample SA, without performing the adjustment for matching the irradiation ranges of the first illumination light and the second illumination light (observation range).

The second illumination optical system 70 directs a second illumination light L2 emitted from the light source unit 51 (second light source 52) toward the +x direction (the second direction orthogonal to the first direction) and gathers light to and irradiates the sample SA. It should be noted that, in FIGS. 2, 15, 16, 18, 19 and 21, the second illumination light L2 is represented by a broken line for easy distinction from the first illumination light L1. The second illumination optical system 70 has an illumination second objective lens 71 as shown in FIGS. 2 and 3. The illumination second objective lens 71 is arranged facing to a left side of the sample SA. The illumination second objective lens 71 gathers the second illumination light L2 emitted from the light source unit 51 (second light source 52) to the sample SA. An optical axis AX2 between the second illumination optical system 70 and the second detection optical system 75 in the second microscope part 50 is orthogonal to an optical axis AX1 between the first illumination optical system 20 and the first detection optical system 30 in the first microscope part 10.

The second detection optical system 75 receives light from the sample SA in response to the irradiation with the second illumination light from the opposite side of the second illumination optical system 70 across the sample SA. The second detection optical system 75 has a detection second objective lens 76 and a second modulation element 77 in order from the sample SA side, as shown in FIGS. 2 and 3. The detection second objective lens 76 is provided on the opposite side of the illumination second objective lens 71 across the sample SA. Light from the sample SA in response to the irradiation with the second illumination light enters the detection second objective lens 76. It should be noted that the illumination second objective lens 71 and the detection second objective lens 76 may have an equal and high numerical aperture (NA) .

The second modulation element 77 is arranged on a surface perpendicular to the optical axis AX2 of the second microscope part 50 (second detection optical system 75) at a conjugated position P2 to a pupil of the detection second objective lens 76 (which may be called "detection pupil" hereinafter) in the second detection optical system 75. The surface perpendicular to the optical axis AX2 of the second microscope part 50 at the conjugated position P2 to the detection pupil is called a "conjugated surface to the detection pupil". The second modulation element 77 is formed by, as an example, evaporating, to a parallel plate such as a glass substrate, a film that allows the light transmittance to be reduced. By arranging this second modulation element 77 on the conjugated surface to the detection pupil, the light transmittance can be changed within the conjugated surface to the detection pupil. Thus, it can be said that the light transmittance in the second modulation element 77 changes within the conjugated surface to the detection pupil. The light transmittance of the second modulation element 77 changes continuously (or discretely) within the conjugated surface to the detection pupil. As the second modulation element 77, any one of a plurality of the second modulation elements 77 having different distributions of light transmittance may be selected and be arranged at the conjugated position P2 to the detection pupil. Details of the light transmittance of the second modulation element 77 are described below. It should be noted that the position where the second modulation element 77 is placed is not limited to the conjugated position P2 to the detection pupil. For example, the second modulation element 77 may be arranged on a surface perpendicular to the optical axis AX2 at a position of the detection pupil (in other words, the surface of the detection pupil). In this case, for example, the second modulation element 77 may be internally contained in the detection second objective lens 76.

The second detector 80 is arranged neighboring to the second modulation element 77 at the conjugated position P2 to the detection pupil in the second detection optical system 75. The second detector 80 is formed by using a photomultiplier tube (PMT), non-descanned detection (NDD) or the like. The second detector 80 detects light from the sample SA through the second detection optical system 75.

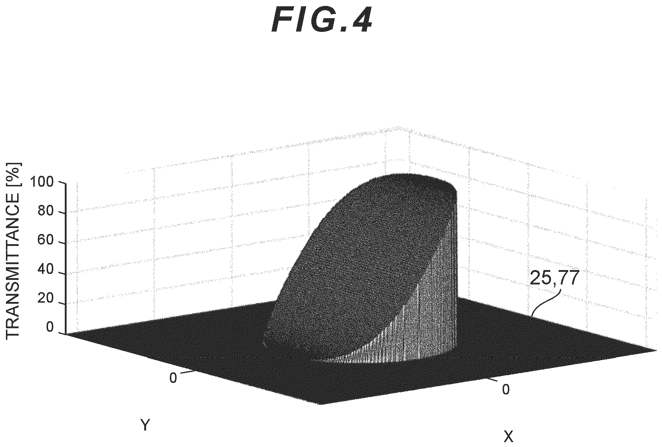

Examples of the changes in light transmittances within the surface of the pupil (in other words, the distribution of light transmittance within the surface of the pupil) of the first modulation element 25 and the second modulation element 77 are described. FIG. 4 is a graph showing an example of the distribution of light transmittances of the first modulation element 25 and the second modulation element 77. Referring to FIG. 4, X is a coordinate in the x direction originating from a coordinate position where the optical axis (the optical axis AX1 of the first microscope part 10 or optical axis AX2 of the second microscope part 50) passes, and Y is a coordinate in the Y direction originating from a coordinate position where the optical axis passes.

In the example shown in FIG. 4, the light transmittance of the first modulation element 25 or the second modulation element 77 changes along one direction in accordance with a continuous function. More specifically, the light transmittance of the first modulation element 25 or second modulation element 77 decreases monotonously in accordance with a sine function in the X direction (for example, -X direction) (the part where the light transmittances are equal is distributed in a linear shape extending toward the Y direction). In other words, the light transmittance of the first modulation element 25 or the second modulation element 77 changes in accordance with a sine function. It should be noted that it can be said that the light transmittance of the first modulation element 25 or the second modulation element 77 increases monotonously in accordance with a sine function in the X direction (+X direction, for example) within a surface of the pupil or it can be said that it decreases or increases monotonously in the X direction.

More specifically, the light transmittance of the first modulation element 25 or second modulation element 77 decreases or increases monotonously in accordance with a sine function in the Y direction (the part where the light transmittances are equal is distributed in a linear shape extending toward the X direction). Alternatively, the light transmittance of the first modulation element 25 or second modulation element 77 may decrease or increase monotonously in accordance with a sine function in an arbitrary direction in the XY coordinate system, without limiting to the X direction and Y direction (the part where the light transmittances are equal may be distributed in a linear shape extending toward a direction perpendicular to the arbitrary direction in the XY coordinate system).

In the example shown in FIG. 4, the light transmittance of the first modulation element 25 or second modulation element 77 may decrease monotonously in accordance with a linear function in the X direction (for example, -X direction). In other words, the light transmittance of the first modulation element 25 or second modulation element 77 changes in accordance with a linear function without limiting to a sine function.

In the example shown in FIG. 4, the aforementioned continuous function may be any one of a linear function, a quadratic function, a Gaussian function, a sine function, and a cosine function. It should be noted that the aforementioned continuous function may be another function such as a cubic function, without limiting to a linear function, a quadratic function, a Gaussian function, a sine function, and a cosine function. Alternatively, the range in which the light transmittance changes in the first modulation element 25 or the second modulation element 77 may be set in accordance with the size (diameter) of a pupil (illumination pupil or detection pupil). For example, in the case shown in FIG. 4, the first modulation element 25 or the second modulation element 77 is formed such that the range in which the light transmittance is equal to zero matches the outer circumference part of the pupil (illumination pupil or detection pupil).

It should be noted that, in a case where the light transmittance of the first modulation element 25 or second modulation element 77 changes in accordance with a cosine function or a sine function, the change desirably follows a cosine function or a sine function in a range smaller than one period within a surface of the pupil (illumination pupil or detection pupil). This is because the POTF value also behaves periodically in a range greater than one period, which is not preferable from viewpoint of performing deconvolution. In this case, since a plurality of frequencies exist with their POTF values equal to zero and the large noise occurs in the course of deconvolution, the accuracy of the resulting refractive index distribution of the sample SA decreases. Also, in a case where the light transmittance of the first modulation element 25 or second modulation element 77 changes in accordance with a cosine function, it is devised such that the light transmittance can be equal to zero (the value of the cosine function I equal to zero) in an outer circumference part of the pupil (illumination pupil or detection pupil), which considers the fact that the discontinuity of the light transmittance in the outer circumference of the pupil causes an artifact such as ringing on an image.

Although, in the example shown in FIG. 4, the light transmittance of the first modulation element 25 or the second modulation element 77 changes along one direction within a surface of the pupil or within a conjugated surface to the pupil in accordance with the continuous function and is equal to zero in a part of an outer circumference within the surface of the pupil or within the conjugated surface to the pupil, the present invention is not limited thereto. For example, the light transmittance of the first modulation element 25 or the second modulation element 77 may change as the distance from the optical axis increases within a surface of the pupil or within a conjugated surface to the pupil in accordance with the continuous function and may be equal to zero in the entire outer circumference within the surface of the pupil or within the conjugated surface to the pupil.

According to this embodiment, when bright-field observation is performed on the sample SA, the first illumination light L1 emitted from the first light source 11 in the first microscope part 10 enters the collector lens 21 in the first illumination optical system 20. The first illumination light L1 having transmitted through the collector lens 21 becomes parallel light, which then passes through the aperture stop 23 (band pass filter 22 and aperture stop 23 when a white light source is used as the first light source 11) and enters the relay lens 24. The first illumination light L1 having transmitted through the relay lens 24 passes through the first modulation element 25 and the aperture stop 26 and enters the condenser lens 27. The first illumination light L1 having transmitted through the condenser lens 27 becomes parallel light and is irradiated to the sample SA on the stage 2. Thus, the first illumination optical system 20 directs a first illumination light L1 emitted from the first light source 11 toward the -z direction (first direction) and irradiates the sample SA.

The light (hereinafter, which may be called "first detection light") having transmitted through the sample SA from the first illumination optical system 20 side enters the first objective lens 32 in the first detection optical system 30. The first detection light having transmitted through the first objective lens 32 enters the image-forming lens 36. The first detection light having transmitted through the image-forming lens 36 is reflected by the mirror 37 and forms an image on a predetermined image surface I where the first detector 40 is placed. The first detector 40 detects the light (first detection light) from the sample SA through the first detection optical system 30 and outputs a detection signal for the light. The detection signal for the light (first detection light) output from the first detector 40 is sent to the image processing part 91 through the control part 90. It should be noted that the first detector 40 captures an image of the sample SA through the detection optical system 40 in other words. Here, the detection signal is a signal indicative of a signal intensity detected by the first detector 40 or the second detector 80 in accordance with the intensity of light (detection light). For example, in a case where the first detector 40 is formed by employing a CCD, it is a signal in each pixel of the CCD. It should be noted that the detection signal of the first detector 40 is a signal indicative of a signal intensity detected by the first detector 40 in accordance with the intensity of the image of the sample SA in other words.

It should be noted that, in a case where bright-field observation is performed on the sample SA, a cylindrical lens (not shown) of the light source unit 51 in the second microscope part 50 is evacuated from the optical path between the first lens 53 in the light source unit 51 and the first galvano mirror 54. The second illumination light emitted from the second light source 52 in the light source unit 51 enters the first lens 53. The second illumination light having transmitted through the first lens 53 becomes parallel light and is reflected by the first galvano mirror 54. The second illumination light reflected by the first galvano mirror 54 transmits through the second lens 55 and the third lens 56 and is reflected by the second galvano mirror 57. The second illumination light reflected by the second galvano mirror 57 enters the liquid lens 59. The second illumination light having transmitted through the liquid lens 59 transmits through the fourth lens 60 and the fifth lens 61 and is emitted to an outside of the light source unit 51. Thus, the light source unit 51 emits the second illumination light.

The second illumination light L2 emitted from the light source unit 51 (second light source 52) enters the illumination second objective lens 71 in the second illumination optical system 70. The second illumination light L2 having transmitted through the illumination second objective lens 71 is gathered and is irradiated to the sample SA on the stage 2. Thus, the second illumination optical system 70 directs a second illumination light L2 emitted from the light source unit 51 (second light source 52) toward the +x direction (the second direction orthogonal to the first direction) and gathers light to and irradiates the sample SA.

The light (hereinafter, which may be called "second detection light") having transmitted through the sample SA from the second illumination optical system 70 side enters the detection second objective lens 76 in the second detection optical system 75. The second detection light having transmitted through the detection second objective lens 76 enters the second detector 80 through the second modulation element 77. The second detector 80 detects the light (second detection light) from the sample SA through the second detection optical system 75 and outputs a detection signal for the light. The detection signal for the light (second detection light) output from the second detector 80 is sent to the image processing part 91 through the control part 90.

Also, the microscope device 1 can be used as selective plane surface illumination microscope (SPIM) to perform fluorescence observation on the sample SA. In a case where fluorescence observation is performed on the sample SA, a cylindrical lens (not shown) of the light source unit 51 in the second microscope part 50 is inserted in the optical path between the first lens 53 in the light source unit 51 and the first galvano mirror 54.

In a case where fluorescence observation is performed on the sample SA, the excitation ray emitted from the second light source 52 in the light source unit 51 enters the first lens 53. The excited ray having transmitted through the first lens 53 transmits through the cylindrical lens (not shown) and is reflected by the first galvano mirror 54. The excited ray reflected by the first galvano mirror 54 transmits through the second lens 55 and the third lens 56 and is reflected by the second galvano mirror 57. The excited ray reflected by the second galvano mirror 57 enters the liquid lens 59. The excited ray having transmitted through the liquid lens 59 transmits through the fourth lens 60 and the fifth lens 61 and is emitted to an outside of the light source unit 51. Thus, the light source unit 51 emits the excited ray that is sheet light.

The excited ray emitted from the light source unit 51 (second light source 52) enters the illumination second objective lens 71 in the second illumination optical system 70. The excited ray having transmitted through the illumination second objective lens 71 is gathered and is irradiated to the sample SA on the stage 2. Thus, the second illumination optical system 70 irradiates the sample SA with the excited ray being sheet light emitted from the light source unit 51 (second light source 52).

With the irradiation with the excited ray, a fluorescent material contained in the sample SA is excited, and fluorescence exits. The fluorescence from the sample SA enters the first objective lens 32 of the first detection optical system 30 in the first microscope part 10. The fluorescence having transmitted through the first objective lens 32 enters the image-forming lens 36. The fluorescence having transmitted through the image-forming lens 36 is reflected by the mirror 37 and forms an image on a predetermined image surface I where the first detector 40 is placed. The first detector 40 detects the fluorescence from the sample SA through the first detection optical system 30 and outputs a detection signal for the fluorescence. The detection signal for the fluorescence output from the first detector 40 is sent to the image processing part 91 through the control part 90.

The control part 90 performs general control over the microscope device 1. The control part 90 is electrically connected to the stage drive part (not shown), the unit drive part 34, the first detector 40, the light source unit 51, the second detector 80, the image processing part 91, an operation input part (not shown), an image display part (not shown) and the like.

In a case where bright-field observation is performed on the sample SA, the image processing part 91 generates data on a refractive index regarding the sample SA based on the detection signal for the light (first detection light) output from the first detector 40 and the detection signal for the light (second detection light) output from the second detector 80. Here, the data on a refractive index regarding the sample SA is data indicative of a refractive index of the sample SA, and may be data on a refractive index at each position on the sample SA, that is, data indicative of a refractive index distribution on the sample SA, for example. Also, the data on a refractive index regarding the sample SA is stored in a storage part (not shown) as a look-up table, for example. Also, the image processing part 91 generates image data with a luminance value of each pixel set in accordance with the value of a refractive index at each position of a refractive index distribution on the sample SA (which may be called "image data on a refractive index distribution of the sample SA, hereinafter). Also, the image processing part 91 generates image data with a luminance value of each pixel set in accordance with the value of a signal intensity of a detection signal at each position (each pixel of the first detector 40) (which may be called "image data on the sample SA by bright-field observation, hereinafter) based on the detection signal for the light (first detection light) output from the first detector 40 and the detection signal for the light (second detection light) output from the second detector 80.

It should be noted that, in a case where fluorescence observation is performed on the sample SA, the image processing part 91 generates image data with a luminance value of each pixel set in accordance with the value of a signal intensity of a detection signal at each position on the sample SA (which may be called "image data on the sample SA by fluorescence observation, hereinafter) based on the detection signal for the fluorescence output from the first detector 40.

Thus, based on the image data on the refractive index distribution of the sample SA generated by the image processing part 91, an image of the refractive index distribution on the sample SA can be displayed on an image display part (not shown). Also, based on the image data on the sample SA by bright-field observation generated by the image processing part 91, an image of the sample SA by the bright-field observation can be displayed on the image display part. Based on the image data on the sample SA by fluorescence observation generated by the image processing part 91, an image of the sample SA by the fluorescence observation can be displayed.

Next, a publicly known method is described by which a three-dimensional refractive index distribution on the sample SA is acquired by the image processing part 91 as data on a refractive index regarding the sample SA. As a representative example for acquiring a three-dimensional refractive index distribution on the sample SA, there is a method by means of a theory called partially coherent-optical diffraction tomography (PC-ODT). The theory of PC-ODT is briefly described below. From the partly coherent imaging formation equation, an intensity I(x, y, z) of an image of a three-dimensional object can be expressed as in the following Expression (1) :

[Expression 1]

$$I(x, y, z)$$

$$= C\left[\iiint \iiint d\xi_1 d\eta_1 d\zeta_1 d\xi_2 d\eta_2 d\zeta_2 \left[\tilde{o}(\xi_1, \eta_1, \zeta_1)\tilde{o}^*(\xi_2, \eta_2, \zeta_2) TCC(\xi_1, \eta_1, \zeta_1, \xi_2, \eta_2, \zeta_2) exp\left[ik\left[(\xi_1 - \xi_2)x + (\eta_1 - \eta_2)y + (\zeta_1 - \zeta_2)z\right]\right]\right]\right]$$

$$\cdots (1)$$

In Expression (1), o represents a complex amplitude transmittance of an object. TCC stands for transmission cross coefficient. $(\xi, \eta, \zeta)$ represents a direction cosine of diffracted light (or direct light). Also, the image in this case is an image of the sample SA resulting from image forming of light (detection light) having transmitted through at least a part of the sample SA with illumination. Therefore, the intensity I (x,y,z) of an image of a three-dimensional object, that is, an image of the three-dimensional sample SA can be replaced by the signal intensity of the detection signal output from the first detector 40 or the like in image processing (for example, the signal intensity at each pixel of the first detector 40 when the sample SA is imaged by the first detector 40). As shown in FIG. 2, it is assumed that the coordinate axis extending in the optical axis direction (top-bottom direction) of the first microscope part 10 is a z axis, and coordinate axes perpendicular to the z axis are an x axis and a y axis. The transmission cross coefficient TCC can be expressed as in the following Expression (2).

[Expression 2]

$$TCC(\xi_1, \eta_1, \zeta_1, \xi_2, \eta_2, \zeta_2)$$

$$= \iiint d\xi_s d\eta_s d\zeta_s S(\xi_s, \eta_s, \zeta_s) G(\xi_1 + \xi_s, \eta_1 + \eta_s, \zeta_1 + \zeta_s) G^*(\xi_2 + \xi_s, \eta_2 + \eta_s, \zeta_2 + \zeta_s)$$

$$\cdots (2)$$

In Expression (2), S represents an illumination pupil. G represents a detection pupil. Since the transmission cross coefficient TCC is Hermite-conjugate, it has a nature indicated in the following Expression (3):

[Expression 3]

$$TCC(\xi_1, \eta_1, \zeta_1, \xi_2, \eta_2, \zeta_2) = TCC^*(\xi_2, \eta_2, \zeta_2, \xi_1, \eta_2, \zeta_1)$$

$$\cdots (3)$$

For a thin sample such as a cell, the 1st-order Born approximation (low contrast approximation) is satisfied because the influence of scattering is small. In this case, only the interference between the direct light (0-order diffracted light) having transmitted through the sample and diffracted light (1st order diffracted light) diffracted by the sample may be required to consider. Therefore, with the 1st order Born approximation and from Expressions (1) to (3) above, the following Expression (4) is acquired.

[Expression 4]

$$I(x,y,z) = 2CRe\left[\iiint d\xi d\eta d\zeta [\tilde{o}(\xi, \eta, \zeta)\tilde{o}^*(0,0,0)TCC(\xi, \eta, \zeta, 0,0,0)exp[ik(\xi x + \eta y + \zeta z)]]\right]$$

$$\cdots (4)$$

Also, complex amplitude transmittance 0 of an object can be approximated as in the following Expression (5).

[Expression 5]

$$o(x,y,z) = [1 + P(x,y,z)]exp[i\Phi(x,y,z)] \simeq 1 + i\Phi(x,y,z) + P(x,y,z)$$

$$\cdots (5)$$

In Expression (5), P represents a real part of a scattering potential. $\Phi$ represents an imaginary part of the scattering potential. By using Expression (5), Expression (4) above can be expressed as in the following Expression (6).

[Expression 6]

$$I(x,y,z) = 2CRe\left[\iiint d\xi d\eta d\zeta \left[[\delta(\xi,\eta,\zeta) + i\tilde{\Phi}(\xi,\eta,\zeta)\right.\right.$$

$$\left.\left. + \tilde{P}(\xi,\eta,\zeta)]TCC(\xi,\eta,\zeta,0,0,0)exp[ik(\xi x + \eta y + \zeta z)]\right]\right]$$

$$\cdots(6)$$

In the expression, TCC is altered to WOTF (Weak Object Transfer Function). WOTF is defined by the following Expression (7).
[Expression 7]

$$TCC(\xi,\eta,\zeta,0,0,0) = WOTF(\xi,\eta,\zeta)$$

$$= \iiint d\xi_s d\eta_s d\zeta_s G(\xi + \xi_s, \eta + \eta_s, \zeta + \zeta_s)S(\xi_s,\eta_s,\zeta_s)G^*(\xi_s,\eta_s,\zeta_s)$$

$$\cdots(7)$$

From Expressions (6) and (7) above, the intensity I(x,y,z) of the image of a three-dimensional object acquired by a transmitted illumination microscope can be expressed as in the following Expression (8) .
[Expression 8]

$$I(x,y,z) = 2CRe\left[\iiint d\xi d\eta d\zeta \left[[\delta(\xi,\eta,\zeta) + i\tilde{\Phi}(\xi,\eta,\zeta)\right.\right.$$

$$\left.\left. + \tilde{P}(\xi,\eta,\zeta)]WOTF(\xi,\eta,\zeta)exp[ik(\xi x + \eta y + \zeta z)]\right]\right]$$

$$\cdots(8)$$

In the expression, it is assumed that the change in amplitude of the sample can be as small as ignorable. That is, P = 0. In this case, expressing Expression (8) above in a real space, the following Expression (9) is acquired:
[Expression 9]

$$I(x,y,z) = 2C\left[\iiint dxdydz Re[EPSF(x,y,z)] - \Phi(x,y,z)\otimes Im[EPSF(x,y,z)]\right]$$

$$\cdots(9)$$

In Expression (9), EPSF stands for effective point spread function. EPSF is equal to a result acquired by performing inverse Fourier transform on WOTF. EPSF is generally a complex function. The first term of Expression (9) expresses a background intensity. The second term of Expression (9) expresses that the imaginary part $\Phi$ of the scattering potential that the sample has is multiplied by the imaginary part Im[EPSF] of EPSF. By utilizing this Expression (9), the imaginary part $\Phi$ of the scattering potential that the sample has can be acquired.

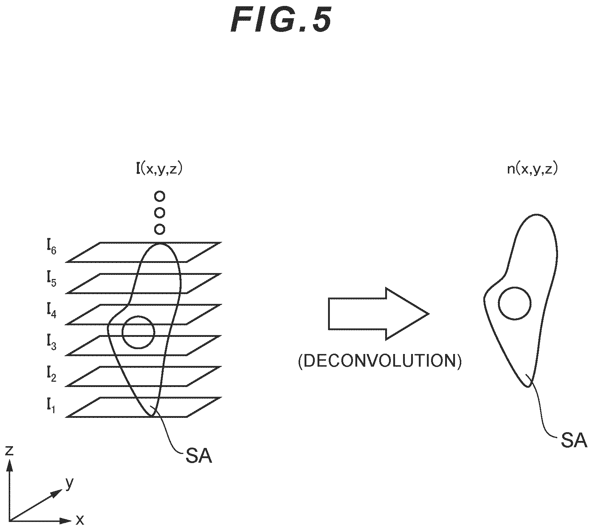

As a first method for acquiring $\Phi(x,y,z)$, there is a method which directly performs deconvolution by employing Im [EPSF]. FIG. 5 schematically shows a process including moving the stage 2 in the z direction (that is, in the optical axis direction), acquiring the intensities of images of a plurality of cross-sectional surfaces (xy cross-sectional surface) at different positions in the z direction of the sample SA (that is, the positions in the optical axis direction) (the signal intensities for detection signals output from the first detector 40 and so on) and performing deconvolution. It should be noted that the images of a plurality of cross-sectional surfaces at different positions in the z direction (that is, in the optical axis direction) of the sample SA may be collectively called a "z-stack image of the sample SA". The first term of Expression (9) is a constant term that expresses a background intensity. First of all, after dividing both sides of Expression (9) by the constant term to standardize it, the first term of the standardized Expression (9) is removed on a real space (or a frequency space). Then, deconvolution is performed by employing Im[EPSF] so that the following Expression (10) is acquired:
[Expression 10]

$$\Phi(x,y,z) = -\mathcal{F}^{-1}\left[ \tilde{I}'(\xi,\eta,\zeta)\frac{POTF(\xi,\eta,\zeta)^*}{|POTF(\xi,\eta,\zeta)|^2 + \gamma} \right]$$

$$\cdots (10)$$

In Expression (10), it is assumed that a result acquired by performing three-dimensional Fourier transform on Im[EPSF] is a phase optical transfer function (POTF). It should be noted that, since Im[EPSF] may take from a positive value to a negative value, the value of POTF may also take from a positive value to a negative value. Here, POTF is an index representing a contrast or resolution of an image of the sample SA by bright-field observation. More specifically, the absolute value of POTF expresses a contrast of the image, and as the absolute value of POTF increases, the contrast of the image of the sample SA by bright-field observation increases. Also, as the size of the region where the value of POTF is not 0 increases in a frequency space, the resolution of the image of the sample SA by bright-field observation increases. Also, the one acquired by standardized with the constant term of Expression (9) the intensity I (for example, $I_1$-$I_6$ in FIG. 5) of the image of each cross-sectional surface of the sample S in the z stack image of the sample SA is I'. It is assumed that y takes an arbitrary small value.

As a second method for acquiring $\Phi(x,y,z)$, there is a method including acquiring a difference in intensity of images of two cross-sectional surfaces at different positions in the z direction of the sample SA (that is, positions in the optical axis direction) and removing the constant term of Expression (9) and then performing deconvolution by employing Im[EPSF]on the difference between the acquired intensities. This method is also disclosed in International Publication No. 2021/064807, and the description is omitted.

It should be noted that the scattering potential $\Phi$ is defined by the following Expression (11) where P = 0.
[Expression 11]

$$\Phi(x,y,z) = k_0^2\{n(x,y,z)^2 - n_m^2\}$$

$$\cdots (11)$$

In Expression (11), n(x,y,z) expresses a three-dimensional refractive index distribution on the sample SA, $k_0$ represents a wavenumber in vacuum, $n_m$ represents a refractive index of a medium. By employing Expression (11), the scattering potential $\Phi$ acquired by the aforementioned method can be converted to a three-dimensional refractive index distribution. The image processing part 91 employs Expression (10) and Expression (11) above to calculate the three-dimensional refractive index distribution n(x,y,z) on the sample SA from the signal intensity of the detection signal output from the first detector 40 and so on, that is, the intensity I(x,y,z) of the image of the three-dimensional sample SA. As an example, the image processing part 91 generates image data with a luminance value of each pixel set in accordance with the value of a refractive index at each position (coordinates) of the calculated three-dimensional refractive index distribution on the sample SA, that is, image data of the three-dimensional refractive index of the sample SA. It should be noted that the intensity of the image of the three-dimensional sample SA can be expressed as an intensity of an image of each cross-sectional surface of the sample SA in the z stack image of the sample SA. In other words, it can be said that the intensity of the image of the three-dimensional sample SA is the intensity of a plurality of images at different positions in the z direction on the sample SA (that is, the positions in the optical axis direction).

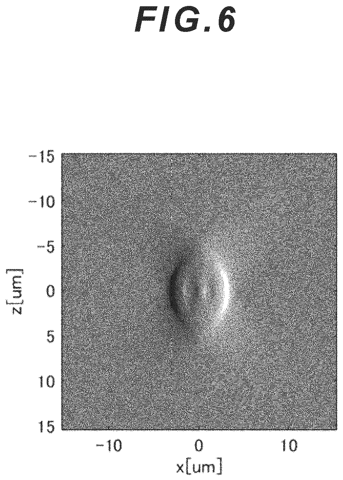

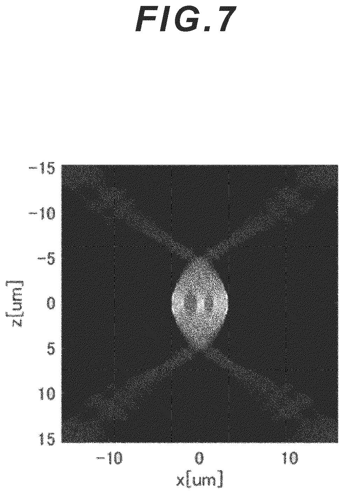

As in the past, in a case where the first microscope part 10 is only employed to detect light from the sample SA, since the POTF has a region (hereinafter, called "missing cone region") where information is missing for the z direction, an error occurs in changes in refractive index in the z direction. For that, it is difficult to generate an image of a three-dimensional refractive index distribution of the sample SA or an image of the sample SA by bright-field observation. FIG. 6 shows an example of the image of the sample SA (xz cross-sectional surface) by bright-field observation which is generated by a conventional method. FIG. 7 shows an example of the image of a three-dimensional refractive index distribution (xz cross-sectional surface) of the sample SA which is generated by a conventional method. As the sample SA shown in FIGS. 6 and 7, a substantially spherical false cell having a known refractive index or the like is employed. In the examples shown in FIGS. 6 and 7, the refractive index of the sample SA (false cell) is set to about 1.35, and the refractive index of the medium is set to 1.33. Also, the illumination side NA (numerical aperture) and the detection side NA of a microscope to be used in the examples shown in FIGS. 6 and 7 are set to 0.95.

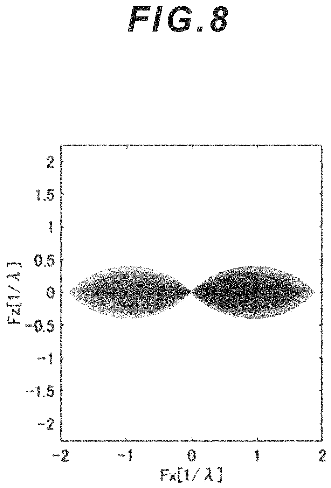

FIG. 8 shows a distribution of POTF in the past. In FIG. 8, the white color (background) indicates that the value of the POTF is 0, and the black color indicates that the value of the POTF is a positive or negative value. Therefore, in FIG. 8, as the darkness of the black color increases, the absolute value of the POTF increases. As shown in FIG. 8, a large missing cone region exists on the central side of the conventional POTF distribution. For that, the image of the sample SA by bright-field observation is deviated from the original substantially spherical shape and extends in the z direction as shown in FIG. 6, for example.

Also, since the POTF has a missing cone region, in a case where Expression (10) and Expression (11) are employed to acquire a three-dimensional refractive index distribution, correction of the refractive index is needed. Accordingly, a missing cone estimation approach such as Gerchberg-Papoulis method, Edge-Preserving Regularization method, or Total Variation Regularization method is employed to perform correction of the refractive index. More specifically, a missing cone estimation algorithm is used to set a constraint condition such that a minimum refractive index value can be a predetermined refractive index value (for example, a refractive index value of a medium in the sample SA, which is known) and estimates a missing cone region.

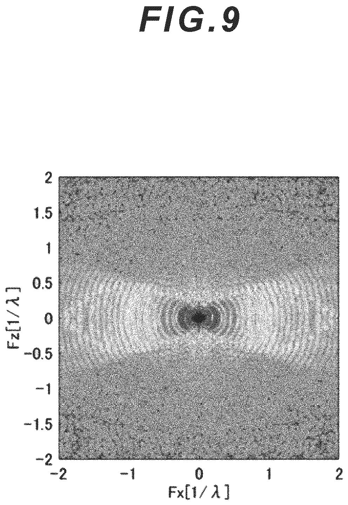

FIG. 9 shows a distribution of a spectrum complemented by estimating a missing cone region of a POTF in the past. As shown in FIG. 9, even by complementing a missing cone region of the POTF, an image of a three-dimensional refractive index distribution of the sample SA is deviated from the original substantially spherical shape and extends in the z direction as shown in FIG. 7, for example.

In this embodiment, the image processing part 91 generates image data of a three-dimensional refractive index distribution of the sample SA based on a detection signal for light output from the first detector 40 when the first illumination optical system 20 irradiates the sample SA with the first illumination light L1 toward the -z direction (first direction) and a detection signal for light output from the second detector 80 when the second illumination optical system 70 gathers light to and irradiates the sample SA with the second illumination light L2 toward the +X direction (a second direction orthogonal to the first direction). Thus, according to this embodiment, since the size of the missing cone region in the POTF can be reduced based on a detection signal for light output from the second detector 80, it is possible to more accurately generate an image of a three-dimensional refractive index distribution of the sample SA or an image of the sample SA by bright-field observation.

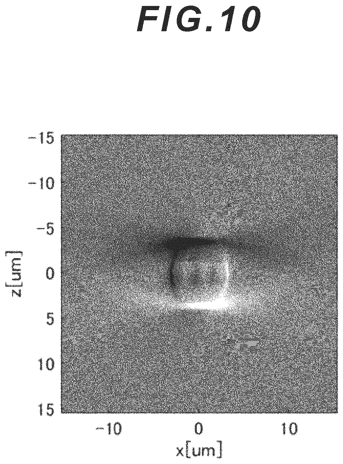

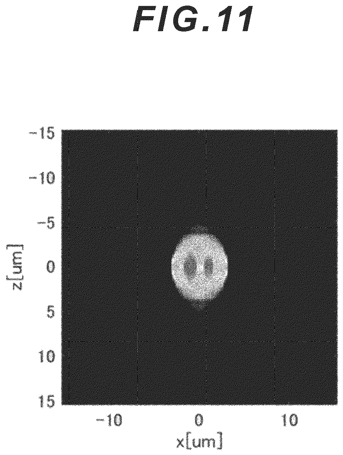

FIG. 10 shows an example of the image of the sample SA (xz cross-sectional surface) by bright-field observation which is generated by a method according to this embodiment. FIG. 11 shows an example of the image of a three-dimensional refractive index distribution (xz cross-sectional surface) of the sample SA which is generated by a method according to this embodiment. As the sample SA shown in FIGS. 10 and 11, a substantially spherical false cell having a known refractive index or the like is employed. In the examples shown in FIGS. 10 and 11, the refractive index of the sample SA (false cell) is set to about 1.35, and the refractive index of the medium is set to 1.33. Also, the illumination side NA (numerical aperture) and the detection side NA of the first microscope part 10 are set to 0.95 and the illumination side NA and the detection side NA of the second microscope part 50 are set to 0.5.

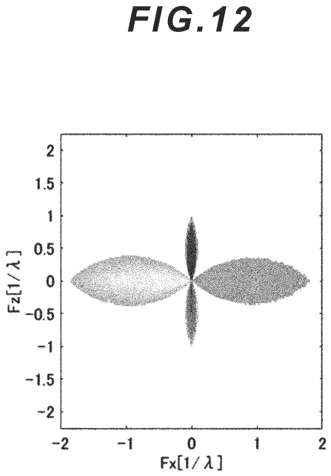

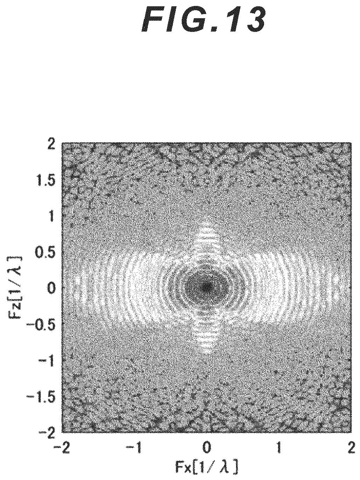

FIG. 12 shows a distribution of POTF according to this embodiment. In FIG. 12, as the darkness of the black color increases, the absolute value of the POTF increases, like FIG. 8. As shown in FIG. 12, on the central side of the POTF distribution according to this embodiment, the POTF based on a detection signal for light output from the second detector 80 exists in a way that covers a missing cone region. For that, the image of the sample SA by bright-field observation is close to the original substantially spherical shape as shown in FIG. 10, for example. FIG. 13 shows a distribution of a spectrum complemented by estimating a missing cone region of POTF according to this embodiment. As shown in FIG. 13, the missing cone region of the POTF can be complemented in a range wider than the past, and an image of a three-dimensional refractive index distribution of the sample SA is close to the original substantially spherical shape as shown in FIG. 11, for example.

Also, it is assumed that f is a spatial frequency, the pupil function of a lens (objective lens/condenser lens) that determines the illumination side NA (numerical aperture) is Pill (f), and the pupil function of a lens (objective lens/condenser lens) that determines the detection side NA is Pcol(f). A POTF can be acquired by convolution of an illumination-related effective pupil function and a detection-delated effective pupil function. In the first microscope part 10 that is a Koehler illumination microscope, it is known that the illumination-related effective pupil function is $|Pill(f)|^2 P*col(f)$ and the detection-related effective pupil function is Pcol(f). On the other hand, in the second microscope part 50 that is a nonconfocal laser microscope, it is known that the illumination-related effective pupil function is Pill(f) and the detection-related effective pupil function is $|Pcol(f)|^2 Pill*(f)$. It should be noted that since the convolution does not change even when the order is changed, an equal POTF can be acquired if the Koehler illumination microscope (first microscope part 10) and nonconfocal laser microscope (second microscope part 50) have equal conditions such as an NA.

In a case where a linear function intensity transmission mask (such as the first modulation element 25 having a light transmittance that increases or decreases monotonously in one direction within the pupil surface in accordance with a linear function, for example) is arranged at a position of the illumination pupil in the Koehler illumination microscope (first microscope part 10), |Pill(f)|$^2$ is a linear function so that the illumination-related effective pupil function is a linear function. Therefore, the distribution of POTF extends in bilateral symmetry in the example shown in FIG. 12, and the resolution of the sample SA in the direction orthogonal to the optical axis is improved. On the other hand, in a case where a linear function intensity transmission mask (such as the second modulation element 77 having a light transmittance that increases or decreases monotonously in one direction within a conjugated surface to the pupil in accordance with a linear function, for example) is arranged at a conjugated position to the detection pupil in the nonconfocal laser microscope (second microscope part 50), |Pcol(f)|$^2$ is a linear function so that the detection-related effective pupil function is a linear function. Therefore, the distribution of POTF extends in upper and lower symmetry in the example shown in FIG. 12, and the resolution of the sample SA in the direction orthogonal to the optical axis is improved. By arranging the Koehler illumination microscope and the nonconfocal laser microscope so as to be orthogonal to each other, the resolutions in two directions (the x direction and the z direction in the example shown in FIG. 12) can be improved, and a three-dimensionally accurate image can be formed for the sample SA that a transparent phase object. Therefore, through the calculations based on a detection signal for light with the Koehler illumination microscope (first microscope part 10) and a detection signal for light with the nonconfocal laser microscope (second microscope part 50), a three-dimensional refractive index distribution on the sample SA can be acquired more accurately.

It should be noted that, if the illumination side NA and the detection side NA are equal, the Koehler illumination microscope (first microscope part 10) and nonconfocal laser microscope (second microscope part 50) may satisfy the following Expression (12):

[Expression 12]

$$\left(\frac{NA\_1}{n\_1}\right)^2 + \left(\frac{NA\_2}{n\_2}\right)^2 = 1$$

$$\cdots (12)$$

In the expression, NA_1 is an NA (numerical aperture) of the Koehler illumination microscope (first microscope part 10). NA_2 is an NA (numerical aperture) of the nonconfocal laser microscope (second microscope part 50). n_1 is a refractive index of an immersion liquid in the sample SA in the Koehler illumination microscope (first microscope part 10). n_2 is a refractive index of an immersion liquid in the sample SA in the nonconfocal laser microscope (second microscope part 50). With the satisfaction of Expression (12), the missing cone region in the POTF can be completely filled so that a three-dimensional refractive index distribution on the sample SA can be acquired more accurately.

Also, although it is ideal that the first microscope part 10 and the second microscope part 50 are arranged so as to be orthogonal to each other, the present invention is not limited thereto. Even when the first microscope part 10 and the second microscope part 50 are arranged at different angles, a three-dimensional refractive index distribution on the sample SA can be acquired more accurately, compared with the case where the first microscope part 10 is only employed.

When the first microscope part 10 that is a Koehler illumination microscope is arranged in a vertical direction and the second microscope part 50 that is a nonconfocal laser microscope is arranged in a horizontal direction, the usability as a microscope device increases since the configuration of a conventional Koehler illumination microscope can be utilized. However, a combination of the first microscope part and the second microscope part is not limited to the combination of a Koehler illumination microscope and a nonconfocal laser microscope. For example, with a combination of Koehler illumination microscopes or a combination of nonconfocal laser microscopes, a three-dimensional refractive index distribution on the sample SA can be acquired more accurately in the same manner.

Although it is ideal that the light transmittances of the first modulation element 25 and the second modulation element 77 increases or decreases monotonously along one direction within a surface of the pupil or within a conjugated surface to the pupil in accordance with a linear function, the present invention is not limited thereto. The light transmittance of one of the first modulation element 25 and the second modulation element 77 may increase or decrease monotonously along one direction within a surface of the pupil or within a conjugated surface to the pupil in accordance with a linear function. As described above, the light transmittance of at least one of the first modulation element 25 and the second modulation element 77 may increase or decrease monotonously along one direction within a surface of the pupil or within a conjugated surface to the pupil in accordance with a continuous function and the continuous function is any function of a sine function, a cosine function, a quadratic function, and a Gaussian function. Even with the configuration, a three-dimensional refractive index distribution on the sample SA can be acquired more accurately.

As described above, as the first modulation element 25, any one of a plurality of the first modulation elements 25 having different changes in light transmittance, that is, different distributions of light transmittance may be selected and be arranged at the position P1 of the illumination pupil. In this case, a turret (not shown) holding a plurality of the first modulation elements 25 may be provided, and the turret may be moved rotationally to select the first modulation element 25 to be arranged at a position P1 of the illumination pupil. It should be noted that, as an element selection part allowing to select one of the plurality of first modulation elements and arrange it at the position P1 of the illumination pupil, an existing mechanism such as a slider may be used without limiting to the turret. Thus, the control part 90 controls the element selection part so as to switch to one of a plurality of the first modulation elements 25 and arrange it at the position P1 of the illumination pupil so that the distribution of light transmittance within the surface of the illumination pupil is changed.

Also, as the second modulation element 77, any one of a plurality of the second modulation elements 77 having different distributions of light transmittance may be selected and be arranged at the conjugated position P2 to the detection pupil. In this case, a turret (not shown) holding a plurality of the second modulation elements 77 may be provided, and the turret may be moved rotationally so as to select the second modulation element 77 to be arranged at the conjugated position P2 to the detection pupil. It should be noted that means (element selection part) similar to the means for selecting one of a plurality of the first modulation elements 25 and arranging it at the position P1 of the illumination pupil can be used as the means for selecting one of the plurality of second modulation elements 77 and arranging it at the conjugated position P2 to the detection pupil. Thus, the control part 90 controls the element selection part so as to switch to one of the plurality of second modulation elements 77 and arrange it at the conjugated position P2 to the detection pupil so that the distribution of light transmittance within the conjugated surface to the detection pupil is changed.

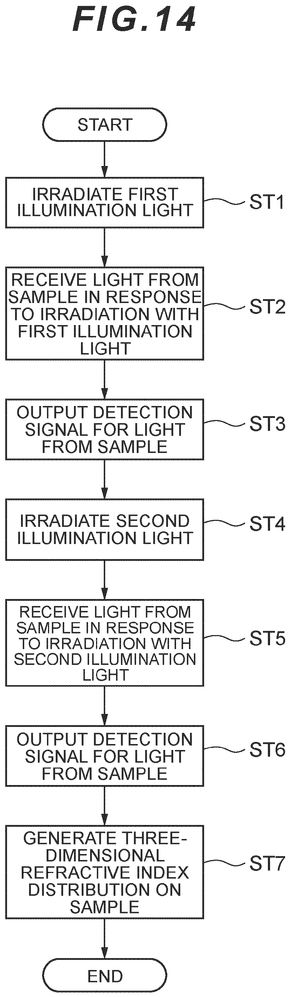

Next, a data generation method for data on a refractive index in the microscope device 1 according to the first embodiment is described. FIG. 14 is a flowchart showing the data generation method according to the first embodiment. It should be noted that the sample SA is mounted in advance on the stage 2. The control part 90 includes a computer system, for example. The control part 90 reads out a control program stored in a storage part and executes various kinds of processing in accordance with the control program.

First of all, the first illumination optical system 20 in the first microscope part 10 irradiates the sample SA with a first illumination light directed toward a first direction (step ST1). Next, the first detection optical system 30 receives light from the sample SA in response to the irradiation with the first illumination light (step ST2). Next, the first detector 40 detects light from the sample SA through the first detection optical system 30 and outputs a detection signal for the light (step ST3). Next, the second illumination optical system 70 in the second microscope part 50 irradiates the sample SA with a second illumination light directed toward a second direction orthogonal to the first direction (step ST4). Next, the second detection optical system 75 receives light from the sample SA in response to the irradiation with the second illumination light (step ST5). Next, the second detector 80 detects light from the sample SA through the second detection optical system 85 and outputs a detection signal for the light (step ST6). It should be noted that the processing in steps ST1 to ST6 is repeated so as to detect light from each of cross-sectional surfaces of the sample SA corresponding to images of a plurality of cross-sectional surfaces at different positions in the z direction (positions in the optical axis direction) of the sample SA, that is, a z stack image of the sample SA. For example, in steps ST1 to ST3, the stage 2 (sample SA) may be moved in the z direction by the stage drive part (not shown) to detect light from each cross-sectional surface of the sample SA with the first microscope part 10 (first detector 40). In steps ST4 to ST6, with the first galvano mirror 54, the second galvano mirror 57, and the liquid lens 59, the sample SA may be three-dimensionally scanned to detect each of lights from each cross-sectional surface of the sample SA with the second microscope part 50 (second detector 80). Then, the image processing part 91 generates a refractive index distribution on the sample SA (for example, image data on a three-dimensional refractive index distribution of the sample SA) based on the detection signal for the light output from the first detector 40 and the detection signal for the light output from the second detector 80 (step ST7). In this case, for example, the image processing part 91 may calculate a three-dimensional refractive index distribution on the sample SA by using Expression (10) and Expression (11) described above based on an intensity of the image of the sample SA acquired by merging the intensity of the image of the sample SA in accordance with the signal intensity of the detection signal output from the first detector 40 and the intensity of the image of the sample SA in accordance with the signal intensity of the detection signal output from the second detector 80. Thus, the three-dimensional refractive index distribution on the sample SA can be acquired more accurately.

Although, in the flow shown in FIG. 14, the steps (steps ST1 to ST3) of irradiating the sample SA with the first illumination light directed toward a first direction and detecting light from the sample SA in response to the irradiation with the first illumination light and the steps (steps ST4 to ST6) of irradiating the sample SA with the second illumination light directed toward a second direction orthogonal to the first direction and detecting light from the sample SA in response to the irradiation with the second illumination light are performed in the order, the present invention is not limited thereto. For example, each of the steps (steps ST1 to ST3) by the first microscope part 10 and each of the steps (steps ST4 to ST6) by the second microscope part 50 may be performed simultaneously. Thus, a three-dimensional refractive index distribution on the sample SA can be acquired in a short period of time.

Although, in the aforementioned first embodiment, the image processing part 91 performs three-dimensional deconvolution based on the detection signal for the light detected by the first detector 40 and the detection signal for the light detected by the second detector 80 with respect to each of cross-sectional surfaces of the sample SA corresponding to the z-stack image of the sample SA and acquires a three-dimensional refractive index distribution on the sample SA (for example, image data on a three-dimensional refractive index distribution of the sample SA), the present invention is not limited thereto. For example, the image processing part 91 may perform two-dimensional deconvolution (for example, two-dimensional deconvolution based on the POTF on the cross-sectional surface with Fz(Fx)=0 in the three-dimensional distribution of POTF exemplarily illustrated in FIG. 12) based on the detection signal for the light detected by the first detector 40 and the detection signal for the light detected by the second detector 80 for each of cross-sectional surfaces of the sample SA corresponding to the z-stack image of the sample SA and acquires a refractive index distribution on each of the cross-sectional surfaces of the sample SA to acquire a three-dimensional refractive index distribution on the sample SA.

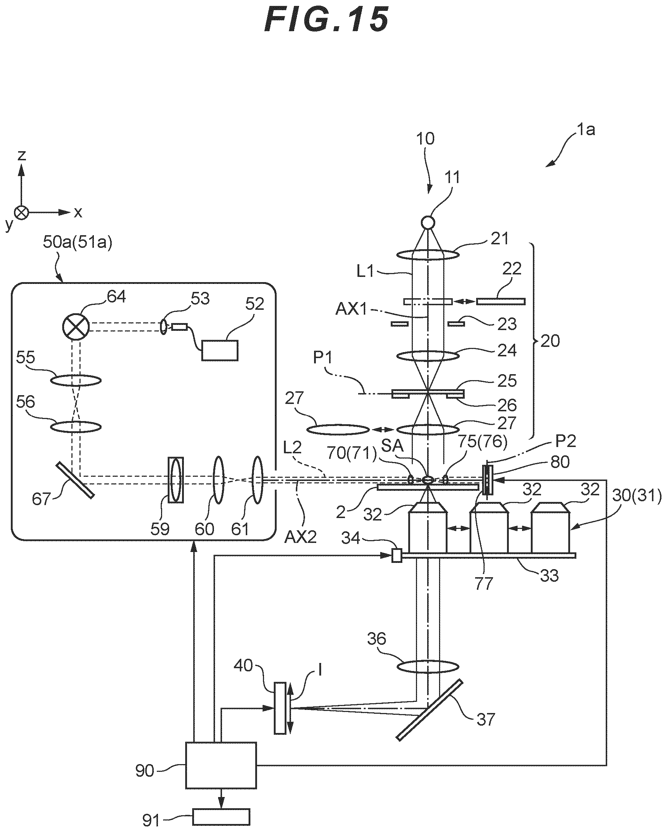

Although, in the aforementioned first embodiment, the light source unit 51 in the second microscope part 50 has the first galvano mirror 54 and the second galvano mirror 57, the present invention is not limited thereto. For example, as in a microscope device 1a shown in FIG. 15, the light source unit 51a in a second microscope part 50a may be configured to have only one galvano mirror 64. In this case, in a light source unit 51a, a mirror 67 is arranged instead of the second galvano mirror 57. Instead of the second galvano mirror 57, the stage 2 is moved in the z direction by a stage drive part (not shown) so that the light-gathering position for the second illumination light on the sample SA is changed to the z direction. Also, the galvano mirror 64 has a similar configuration to that of the first galvano mirror 54 and changes the direction of travel of the second illumination light so that the light-gathering position for the second illumination light on the sample SA can be changed to the y direction. By changing the light-gathering position for the second illumination light in a three-dimensional direction on the sample SA with the galvano mirror 64, the liquid lens 59 and the stage drive part, the sample SA can be three-dimensionally scanned. In this case, while the stage 2 (sample SA) is being moved in the z direction by the stage drive part to detect light from each cross-sectional surface of the sample SA with the first microscope part 10 (first detector 40), the sample SA may be scanned with the galvano mirror 64 and the liquid lens 59 to detect each light from each cross-sectional surface of the sample SA with the second microscope part 50a (second detector 80). Thus, each of the steps (steps ST1 to ST3) by the first microscope part 10 and each of the steps (steps ST4 to ST6) by the second microscope part 50a can be performed simultaneously.

<Second Embodiment>

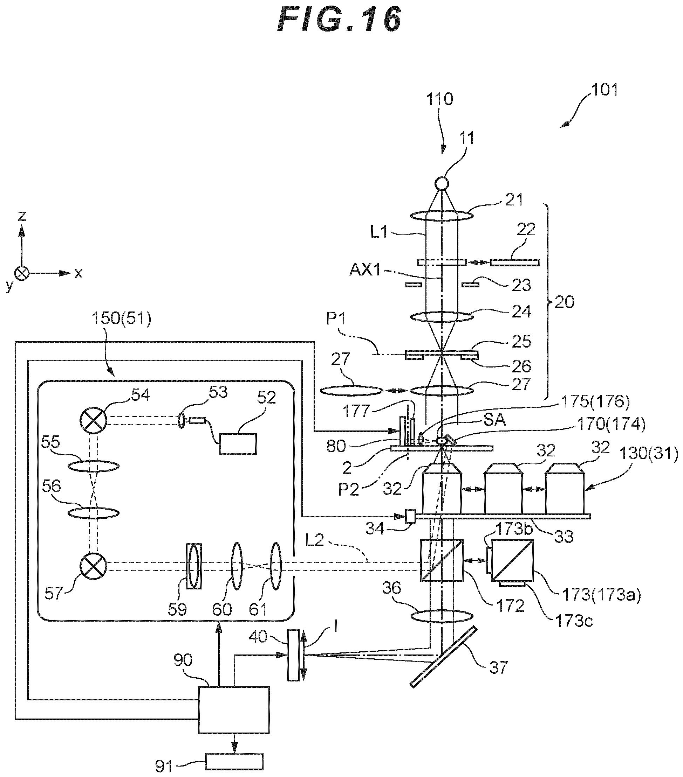

Next, with reference to FIG. 16, a microscope device 101 according to a second embodiment is described. The microscope device 101 according to the second embodiment has the common configuration in the principal part to the microscope device 1 according to the first embodiment except for a second microscope part. Thus, like references are given to like components between the first embodiment and the second embodiment, and detailed descriptions are omitted. The microscope device 101 according to the second embodiment has a first microscope part 110 and a second microscope part 150. The microscope device 101 according to the second embodiment further has a stage 2, a control part 90, and an image processing part 91.

The first microscope part 110 has a first light source 11, a first illumination optical system 20, a first detection optical system 130, and a first detector 40. The first light source 11, the first illumination optical system 20, and the first detector 40 are configured similarly to the first embodiment. The first detection optical system 130 has, in order from the sample SA side, an objective lens unit 31, an image-forming lens 36, and a mirror 37, like the first embodiment. The first detection optical system 130 further includes a half mirror 172 in the second microscope part 150. The objective lens unit 31, the image-forming lens 36, and the mirror 37 are configured similarly to the first embodiment.

The second microscope part 150 has a light source unit 51, a second illumination optical system 170, a second detection optical system 175, and a second detector 80. The light source unit 51 and the second detector 80 are configured similarly to the first embodiment.

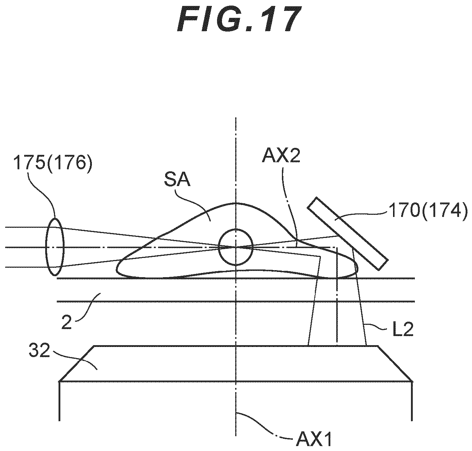

The second illumination optical system 170 directs a second illumination light L2 emitted from the light source unit 51 (second light source 52) toward the -x direction (the second direction orthogonal to the first direction) and gathers light to and irradiates the sample SA. The second illumination optical system 170 has a half mirror 172 and an illumination mirror 174 as shown in FIGS. 16 and 17. The second illumination optical system 170 further includes an objective lens unit 31 (first objective lens 32) in the first microscope part 110 (first detection optical system 130).

The half mirror 172 is arranged on an optical path between the first objective lens 32 and the image-forming lens 36 in the first microscope part 110 (first detection optical system 130). The ratio of the transmittance and reflectivity of the half mirror 172 is set to 1:1, for example. The half mirror 172 reflects a part of the second illumination light L2 emitted from the light source unit 51 (second light source 52) toward a detection pupil (rear-side focal point surface) in the first objective lens 32. The first objective lens 32 gathers the second illumination light L2 reflected by the half mirror 172. It should be noted that since the second illumination light L2 reflected by the half mirror 172 passes through the detection pupil (rear-side focal point surface) in the first objective lens 32 from the direction tilting relative to the central axis of the first objective lens 32, the second illumination light L2 travels in the +z direction offset relative to the central axis of the first objective lens 32 after being transmitted through the first objective lens 32. The illumination mirror 174 is arranged to face to the right side of the sample SA above the first objective lens 32 (and the stage 2). The illumination mirror 174 reflects the second illumination light L2 being transmitted through the first objective lens 32 and traveling in the +z direction offset relative to the central axis of the first objective lens 32 toward the -x direction (second direction). An optical axis AX2 between the second illumination optical system 170 and the second detection optical system 175 in the second microscope part 150 and is orthogonal to an optical axis AX1 between the first illumination optical system 20 and the first detection optical system 130 in the first microscope part 110.

The second detection optical system 175 receives light from the sample SA in response to the irradiation with the second illumination light from the opposite side of the second illumination optical system 170 across the sample SA. The second detection optical system 175 has a detection second objective lens 176 and a second modulation element 177 in order from the sample SA side, as shown in FIGS. 16 and 17. The detection second objective lens 176 is provided on the opposite side of the illumination mirror 174 across the sample SA. Light from the sample SA in response to the irradiation with the second illumination light enters the detection second objective lens 176. The second modulation element 177 is arranged on a conjugated surface to the detection pupil of the detection second objective lens 176 in the second detection optical system 175 (on a surface perpendicular to the optical axis AX2 of the second microscope part 150 (second detection optical system 175) at a conjugated position P2 to the detection pupil). The second modulation element 177 is configured similarly to the second modulation element 77 according to the first embodiment.

According to the second embodiment, in a case where bright-field observation is performed on the sample SA, the first illumination optical system 20 in the first microscope part 110 directs a first illumination light L1 emitted from the first light source 11 toward the -z direction and irradiates the sample SA, like the first embodiment.

The first detection light having transmitted through the sample SA from the first illumination optical system 20 side enters the first objective lens 32 in the first detection optical system 130. The first detection light having transmitted through the first objective lens 32 enters the half mirror 172. A part of the first detection light having entered the half mirror 172 transmits through the half mirror 172 and enters the image-forming lens 36. The first detection light having transmitted through the image-forming lens 36 is reflected by the mirror 37 and forms an image on a predetermined image surface I where the first detector 40 is placed. The first detector 40 detects the light (first detection light) from the sample SA through the first detection optical system 130 and outputs a detection signal for the light. The detection signal for the light (first detection light) output from the first detector 40 is sent to the image processing part 91 through the control part 90.

The second illumination light L2 emitted from the light source unit 51 (second light source 52) in the second microscope part 150 enters the half mirror 172 in the second illumination optical system 170. A part of the second illumination light L2 having entered the half mirror 172 is reflected by the half mirror 172 and enters the first objective lens 32 and passes through the detection pupil in the first objective lens 32 from the direction tilting relative to the central axis of the first objective lens 32. The second illumination light L2 having transmitted through the first objective lens 32 is reflected by the illumination mirror 174 and is gathered and irradiated to the sample SA on the stage 2. Thus, the second illumination optical system 170 directs a second illumination light L2 emitted from the light source unit 51 (second light source 52) toward the -x direction (the second direction orthogonal to the first direction) and gathers light to and irradiates the sample SA.

The second detection light having transmitted through the sample SA from the second illumination optical system 170 side enters the detection second objective lens 176 in the second detection optical system 175. The second detection light having transmitted through the detection second objective lens 176 enters the second detector 80 through the second modulation element 177. The second detector 80 detects the light (second detection light) from the sample SA through the second detection optical system 175 and outputs a detection signal for the light. The detection signal for the light (second detection light) output from the second detector 80 is sent to the image processing part 91 through the control part 90.

Also, in a case where fluorescence observation is performed on the sample SA by the second microscope part 150, a cylindrical lens (not shown) of the light source unit 51 in the second microscope part 150 is inserted in the optical path between the first lens 53 in the light source unit 51 and the first galvano mirror 54. Also, a fluorescence filter cube 173 instead of the half mirror 172 is inserted in the optical path between the first objective lens 32 and the image-forming lens 36. The fluorescence filter cube 173 has a dichroic mirror 173a, an excitation filter 173b, and absorption filter 173c.

An excited ray emitted from the light source unit 51 (second light source 52) enters the dichroic mirror 173a through the excitation filter 173b in the fluorescence filter cube 173. The excited ray having entered the dichroic mirror 173a in the fluorescence filter cube 173 is reflected by the dichroic mirror 173a and enters the first objective lens 32 and passes through the detection pupil in the first objective lens 32 from the direction tilting relative to the central axis of the first objective lens 32. The excited ray having transmitted through the first objective lens 32 is reflected by the illumination mirror 174 and is gathered and irradiated to the sample SA on the stage 2. Thus, the second illumination optical system 170 irradiates the sample SA with the excited ray being sheet light emitted from the light source unit 51 (second light source 52).

With the irradiation with the excited ray, a fluorescent material contained in the sample SA is excited, and fluorescence exits. The fluorescence from the sample SA enters the first objective lens 32 of the first detection optical system 130. The fluorescence having transmitted through the first objective lens 32 enters the dichroic mirror 173a in the fluorescence filter cube 173. The fluorescence having entered the dichroic mirror 173a in the fluorescence filter cube 173 transmits through the dichroic mirror 173a, passes through the absorption filter 173c and enters the image-forming lens 36. The fluorescence having transmitted through the image-forming lens 36 is reflected by the mirror 37 and forms an image on a predetermined image surface I where the first detector 40 is placed. The first detector 40 detects the fluorescence from the sample SA through the first detection optical system 130 and outputs a detection signal for the fluorescence. The detection signal for the fluorescence output from the first detector 40 is sent to the image processing part 91 through the control part 90.

According to the second embodiment, a three-dimensional refractive index distribution on the sample SA (for example, image data on a three-dimensional refractive index distribution of the sample SA) can be generated in a manner similar to the method for generating data on a refractive index according to the first embodiment. Therefore, according to the second embodiment, the effect similar to that of the first embodiment can be achieved.

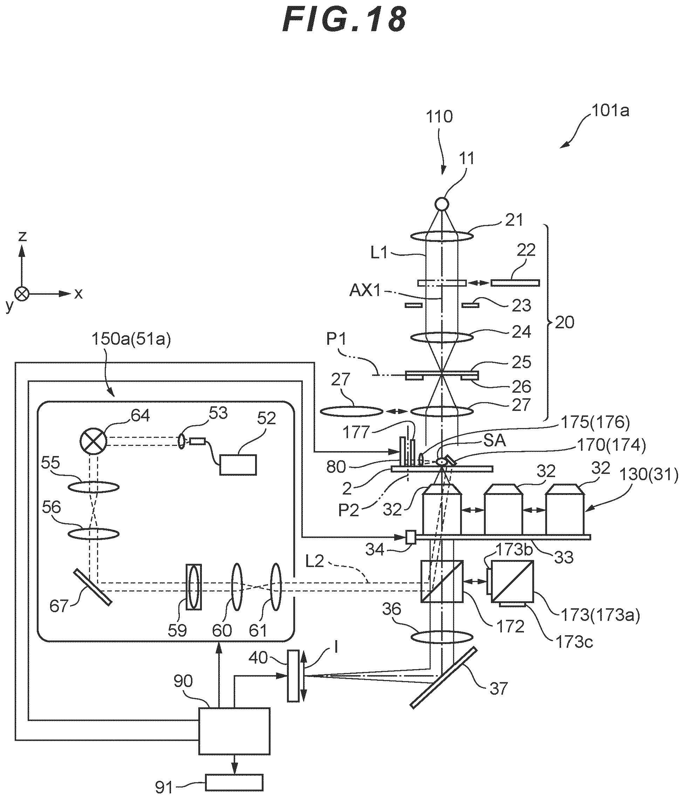

Although, in the aforementioned second embodiment, the light source unit 51 in the second microscope part 150 has the first galvano mirror 54 and the second galvano mirror 57, the present invention is not limited thereto. For example, as in a microscope device 101a shown in FIG. 18, the light source unit 51a in the second microscope part 150a may be configured to have only one galvano mirror 64. In this case, in the light source unit 51a, a mirror 67 is arranged instead of the second galvano mirror 57, like the microscope device 1a according to a variation example of the first embodiment.

<Third Embodiment>

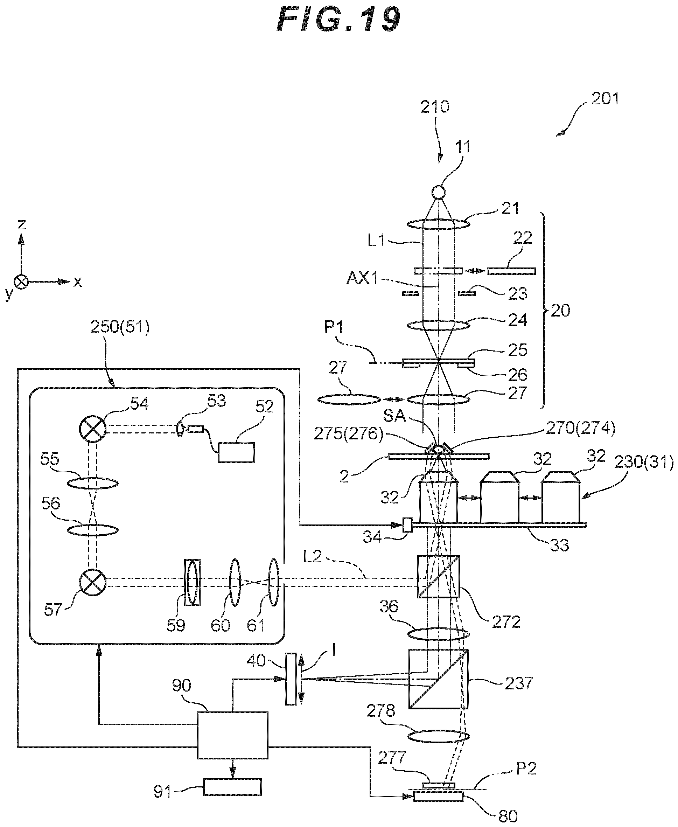

Next, with reference to FIG. 19, a microscope device 201 according to a third embodiment is described. The microscope device 201 according to the third embodiment has the common configuration in the principal part to the microscope device 1 according to the first embodiment except for a second microscope part. Thus, like references are given to like components between the first embodiment and the third embodiment, and detailed descriptions are omitted. The microscope device 201 according to the third embodiment has a first microscope part 210 and a second microscope part 250. The microscope device 201 according to the third embodiment further has a stage 2, a control part 90, and an image processing part 91.

The first microscope part 210 has a first light source 11, a first illumination optical system 20, a first detection optical system 230, and a first detector 40. The first light source 11, the first illumination optical system 20, and the first detector 40 are configured similarly to the first embodiment. The first detection optical system 230 has, in order from the sample SA side, an objective lens unit 31, an image-forming lens 36, and a polarized beam splitter 237. The first detection optical system 230 further includes a half mirror 272 in the second microscope part 250. The objective lens unit 31 and the image-forming lens 36 are configured similarly to the first embodiment. The polarized beam splitter 237 reflects light (s-polarized light) from the sample SA in response to the irradiation with a first illumination light and allows light (p-polarized light) from the sample SA in response to the irradiation with a second illumination light.

The second microscope part 250 has a light source unit 51, a second illumination optical system 270, a second detection optical system 275, and a second detector 80. The light source unit 51 and the second detector 80 are configured similarly to the first embodiment.

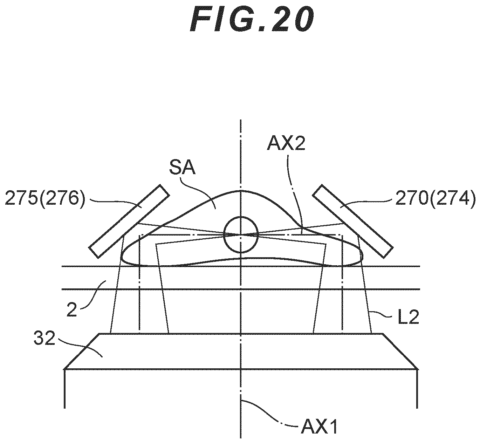

The second illumination optical system 270 directs a second illumination light L2 emitted from the light source unit 51 (second light source 52) toward the -x direction (the second direction orthogonal to the first direction) and gathers light to and irradiates the sample SA. The second illumination optical system 270 has a half mirror 272 and an illumination mirror 274 as shown in FIGS. 19 and 20. The second illumination optical system 270 further includes an objective lens unit 31 (first objective lens 32) in the first microscope part 210 (first detection optical system 230).

The half mirror 272 is arranged on an optical path between the first objective lens 32 and the image-forming lens 36 in the first microscope part 210 (first detection optical system 230). The ratio of the transmittance and reflectivity of the half mirror 272 is set to 1:1, for example. The half mirror 272 reflects a part of the second illumination light L2 emitted from the light source unit 51 (second light source 52) toward a detection pupil (rear-side focal point surface) in the first objective lens 32. The first objective lens 32 gathers the second illumination light L2 reflected by the half mirror 272. It should be noted that since the second illumination light L2 reflected by the half mirror 272 passes through the detection pupil (rear-side focal point surface) in the first objective lens 32 from the direction tilting relative to the central axis of the first objective lens 32, the second illumination light L2 travels in the +z direction offset relative to the central axis of the first objective lens 32 after being transmitted through the first objective lens 32. The illumination mirror 274 is arranged to face to the right side of the sample SA above the first objective lens 32 (and the stage 2). The illumination mirror 274 reflects the second illumination light L2 being transmitted through the first objective lens 32 and traveling in the +z direction offset relative to the central axis of the first objective lens 32 toward the -x direction (second direction). An optical axis AX2 between the second illumination optical system 270 and the second detection optical system 275 in the second microscope part 250 is orthogonal to an optical axis AX1 between the first illumination optical system 20 and the first detection optical system 230 in the first microscope part 210.

The second detection optical system 275 receives light from the sample SA in response to the irradiation with the second illumination light from the opposite side of the second illumination optical system 270 across the sample SA. The second detection optical system 275 has a detection mirror 276, a relay lens 278, and a second modulation element 277, as shown in FIGS. 19 and 20. The second detection optical system 275 further includes an objective lens unit 31 (first objective lens 32) and an image-forming lens 36 in the first microscope part 210 (first detection optical system 230), the polarized beam splitter 237, and a half mirror 272 in the second illumination optical system 270.

The detection mirror 276 is provided on the opposite side of the illumination mirror 274 across the sample SA above the first objective lens 32 (and the stage 2). The illumination mirror 274 reflects the light from the sample SA in response to the irradiation with the second illumination light toward the -z direction (that is, the first objective lens 2) offset relative to the central axis of the first objective lens 32. Light from the sample SA in response to the irradiation with the second illumination light enters the first objective lens 32 through the detection mirror 276. The relay lens 278 causes light (p-polarized light) from the sample SA having transmitted through the polarized beam splitter 237 to enter the second modulation element 277. The second modulation element 277 is arranged on a conjugated surface to the detection pupil of the first objective lens 32 in the second detection optical system 275 (on a surface perpendicular to the optical axis of the second microscope part 250 (second detection optical system 275) at a conjugated position P2 to the detection pupil). The second modulation element 277 is configured similarly to the second modulation element 77 according to the first embodiment.

According to the third embodiment, in a case where bright-field observation is performed on the sample SA, the first illumination optical system 20 in the first microscope part 110 directs a first illumination light L1 emitted from the first light source 11 toward the -z direction and irradiates the sample SA, like the first embodiment. It should be noted that, according to the third embodiment, a polarizer (not shown) is arranged in, for example, an optical path in the first illumination optical system 20 (for example, an optical path between the collector lens 21 and the aperture stop 23) such that s-polarized light (first detection light) enters the polarized beam splitter 237.

The first detection light (s-polarized light) having transmitted through the sample SA from the first illumination optical system 20 side enters the first objective lens 32 in the first detection optical system 230. The first detection light having transmitted through the first objective lens 32 enters the half mirror 272. A part of the first detection light having entered the half mirror 272 transmits through the half mirror 272 and enters the image-forming lens 36. The first detection light (s-polarized light) having transmitted through the image-forming lens 36 is reflected by the polarized beam splitter 237 and forms an image on a predetermined image surface I where the first detector 40 is placed. The first detector 40 detects the light (first detection light) from the sample SA through the first detection optical system 230 and outputs a detection signal for the light. The detection signal for the light (first detection light) output from the first detector 40 is sent to the image processing part 91 through the control part 90.

The second illumination light L2 emitted from the light source unit 51 (second light source 52) in the second microscope part 250 enters the half mirror 272 in the second illumination optical system 270. It should be noted that, according to the third embodiment, for example, the light source unit 51 (second light source 52) emits the second illumination light L2 that is linearly polarized light such that p-polarized light (second detection light) can enter the polarized beam splitter 237. A part of the second illumination light L2 having entered the half mirror 272 is reflected by the half mirror 272 and enters the first objective lens 32 and passes through the detection pupil in the first objective lens 32 from the direction tilting relative to the central axis of the first objective lens 32. The second illumination light L2 having transmitted through the first objective lens 32 is reflected by the illumination mirror 274 and is gathered and irradiated to the sample SA on the stage 2. Thus, the second illumination optical system 270 directs a second illumination light L2 emitted from the light source unit 51 (second light source 52) toward the -x direction (the second direction orthogonal to the first direction) and gathers light to and irradiates the sample SA.

The second detection light (p-polarized light) having transmitted through the sample SA from the second illumination optical system 270 side is reflected by the detection mirror 276 in the second detection optical system 275 and enters the first objective lens 32. The second detection light having transmitted through the first objective lens 32 enters the half mirror 272. A part of the second detection light having entered the half mirror 272 transmits through the half mirror 272 and enters the image-forming lens 36. The second detection light (p-polarized light) having transmitted through the image-forming lens 36 transmits through the polarized beam splitter 237 and enters the relay lens 278. The second detection light having transmitted through the relay lens 278 enters the second detector 80 through the second modulation element 277. The second detector 80 detects the light (second detection light) from the sample SA through the second detection optical system 275 and outputs a detection signal for the light. The detection signal for the light (second detection light) output from the second detector 80 is sent to the image processing part 91 through the control part 90.

According to the third embodiment, a three-dimensional refractive index distribution on the sample SA (for example, image data on a three-dimensional refractive index distribution of the sample SA) can be generated in a manner similar to the method for generating data on a refractive index according to the first embodiment. Therefore, according to the third embodiment, the effect similar to that of the first embodiment can be achieved.

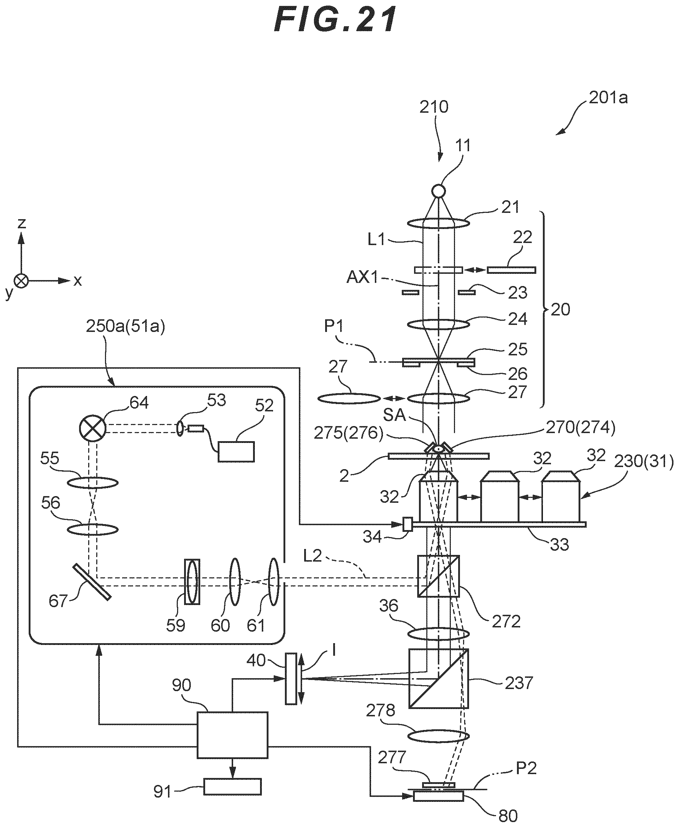

Although, in the aforementioned third embodiment, the light source unit 51 in the second microscope part 250 has the first galvano mirror 54 and the second galvano mirror 57, the present invention is not limited thereto. For example, as in a microscope device 201a shown in FIG. 21, the light source unit 51a in the second microscope part 250a may be configured to have only one galvano mirror 64. In this case, in the light source unit 51a, a mirror 67 is arranged instead of the second galvano mirror 57, like the microscope device 1a according to a variation example of the first embodiment.

<Fourth Embodiment>

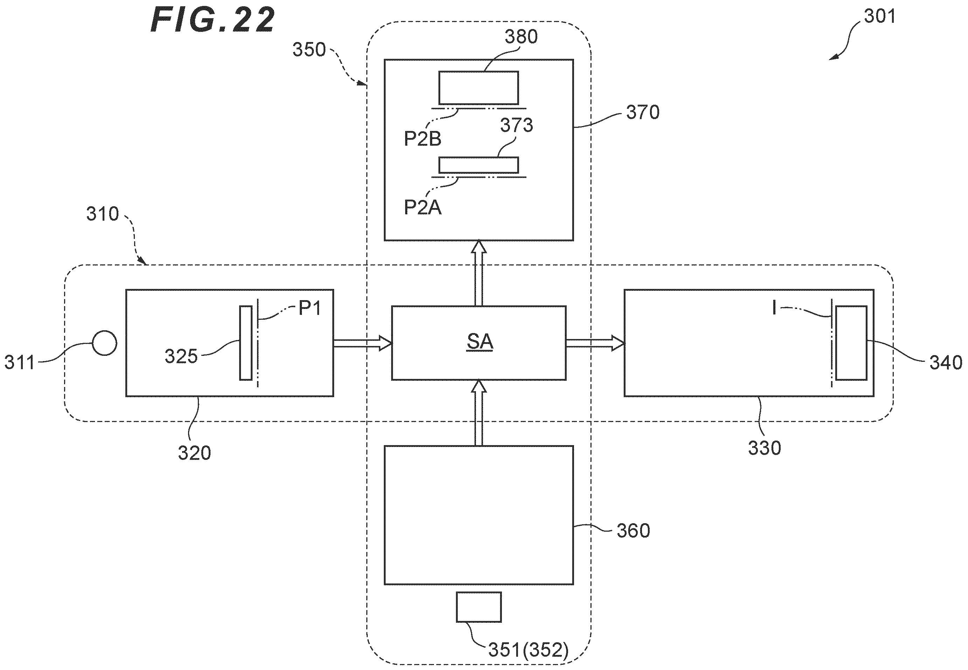

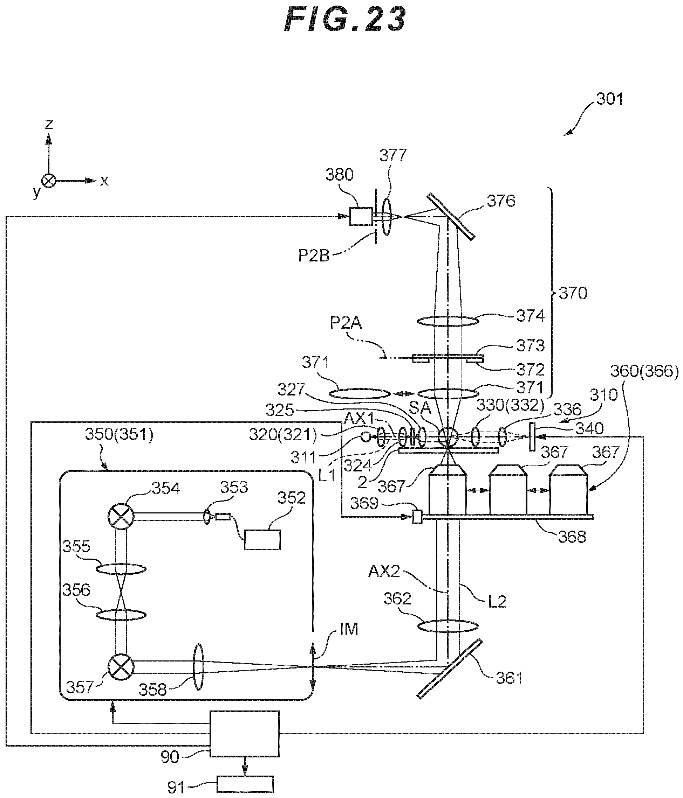

Next, with reference to FIGS. 22 and 23, a microscope device 301 according to a fourth embodiment is described. The microscope device 301 according to the fourth embodiment has the common configuration in the principal part to the microscope device 1 according to the first embodiment except for a first microscope part and a second microscope part. Thus, like references are given to like components between the first embodiment and the third embodiment, and detailed descriptions are omitted. As shown in FIGS. 22 and 23, the microscope device 301 according to the fourth embodiment has a first microscope part 310 and a second microscope part 350. The microscope device 301 according to the fourth embodiment further has a stage 2, a control part 90, and an image processing part 91, as shown in FIG. 23. It should be noted that, according to the fourth embodiment, as shown in FIG. 23, it is assumed that the coordinate axis extending in the optical axis direction (top-bottom direction) of the second microscope part 350 is a z axis, and coordinate axes perpendicular to the z axis are x axis and a y axis.

The first microscope part 310 has, as shown in FIGS. 22 and 23, a first light source 311, a first illumination optical system 320, a first detection optical system 330, and a first detector 340. The first light source 311 is configured similarly to the first light source 11 according to the first embodiment. The first light source 311 generates a first illumination light. Also, the first light source 311 is arranged at a conjugated position to the illumination pupil.

The first illumination optical system 320 directs a first illumination light L1 emitted from the first light source 311 toward the +x direction and irradiates the sample SA. It should be noted that, in FIG. 23, the first illumination light L1 is represented by a broken line for easy distinction from the second illumination light L2. The first illumination optical system 320 has, in order from the first light source 311 side, a collector lens 321, an aperture stop (not shown), a relay lens 324, a first modulation element 325, an aperture stop (not shown), and a condenser lens 327, as shown in FIG. 23. The collector lens 321, the aperture stop, the relay lens 324, the first modulation element 325, the aperture stop, and the condenser lens 327 are configured similarly to the collector lens 21, the aperture stop 23, the relay lens 24, the first modulation element 25, the aperture stop 26, and the condenser lens 27 according to the first embodiment except that they are arranged side by side in the x direction. It should be noted that the condenser lens 327 is arranged facing to a left side of the stage 2. Also, in a case where a white light source is used as the first light source 311, an element (such as a band pass filter, for example) that narrows the wavelength band of the first illumination light may be provided like the first embodiment.

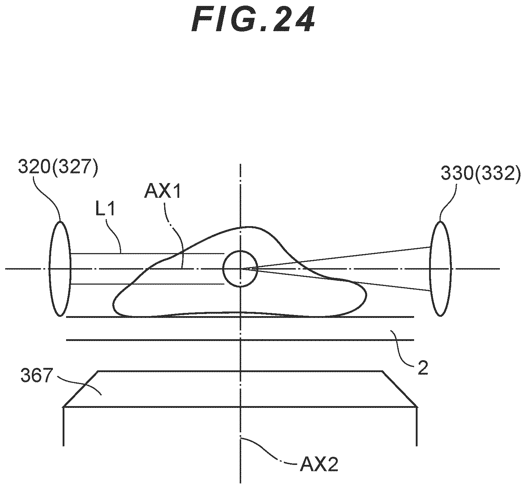

The first detection optical system 330 receives light from the sample SA in response to the irradiation with the first illumination light L1 from the opposite side of the first illumination optical system 320 across the sample SA. As shown in FIGS. 23 and 24, the first detection optical system 330 has, in order from the sample SA side, a first objective lens 332 and an image-forming lens 336. The first objective lens 332 is provided on the opposite side of the condenser lens 327 across the sample SA. Light from the sample SA in response to the irradiation with the first illumination light enters the first objective lens 332. The light having transmitted through the first objective lens 332 enters the image-forming lens 336. The light having transmitted through the image-forming lens 336 forms an image on a predetermined image surface I (see FIG. 22).

A first detector 340 is arranged on the image surface I of the first detection optical system 330. The first detector 340 is configured similarly to the first detector 40 according to the first embodiment. The first detector 340 detects light from the sample SA through the first detection optical system 330.

The second microscope part 350 has, as shown in FIGS. 22 and 23, a light source unit 351, a second illumination optical system 360, a second detection optical system 370, and a second detector 380. The light source unit 351 is also called a "beam steering unit". The light source unit 351 has, as shown in FIG. 23, a second light source 352, a first lens 353, a first galvano mirror 354, a second lens 355, a third lens 356, a second galvano mirror 357, and a fourth lens 358. The light source unit 351 further has a detachable cylindrical lens (not shown) on an optical path between the first lens 353 and the first galvano mirror 354.

The second light source 352, the first lens 353, the first galvano mirror 354, the second lens 355, the third lens 356, and the second galvano mirror 357 are configured similarly to the second light source 52, the first lens 53, the first galvano mirror 54, the second lens 55, the third lens 56, and the second galvano mirror 57 according to the first embodiment. It should be noted that the first galvano mirror 354 may change the direction of travel of the second illumination light so that the light-gathering position for the second illumination light on the sample SA can be changed to the y direction. The second galvano mirror 357 may change the direction of travel of the second illumination light so that the light-gathering position for the second illumination light on the sample SA can be changed to the x direction.

The fourth lens 358 gathers the second illumination light reflected by the second galvano mirror 357 on a predetermined middle image surface IM and causes it to enter the second illumination optical system 360. The position of the predetermined middle image surface IM is a conjugated position to the focal position of the second objective lens 366 in the sample SA. By changing the light-gathering position for the second illumination light on the sample SA with the first galvano mirror 354, the second galvano mirror 357 and the stage drive part in the three-dimensional directions (three directions of the x direction, the y direction, and the z direction), the sample SA can be three-dimensionally scanned.

The second illumination optical system 360 directs a second illumination light L2 emitted from the light source unit 351 (second light source 352) toward the +z direction (the second direction orthogonal to the first direction) and gathers light to and irradiates the sample SA. As shown in FIGS. 22 and 23, the second illumination optical system 360 has, in order from the light source unit 351 side, a mirror 361, a collimator lens 362 and an objective lens unit 366. The mirror 361 reflects the second illumination light L2 emitted from the light source unit 351 (second light source 352) toward the collimator lens 362. The collimator lens 362 makes the second illumination light L2 reflected by the mirror 361 parallel.

The objective lens unit 366 has a plurality of illumination second objective lenses 367, a lens holding part 368, and a unit drive part 369. The illumination second objective lens 367 is arranged facing to a lower side of the stage 2. The lens holding part 368 holds the plurality of illumination second objective lenses 367 having different optical properties. The lens holding part 368 is formed by using a revolver, turret or the like, for example. The unit drive part 369 may drive the lens holding part 368 and select any one of the plurality of illumination second objective lenses 367 and place it under the stage 2. It should be noted that the unit drive part 369 may move the lens holding part 368 along the z axis. In this case, the aforementioned stage drive part may be additionally used, or no stage drive may be used.

The illumination second objective lens 367 arranged under the stage 2 gathers the second illumination light L2 having transmitted through the collimator lens 362 to the sample SA. As also shown in FIG. 24, an optical axis AX2 between the second illumination optical system 360 and the second detection optical system 370 in the second microscope part 350 is orthogonal to an optical axis AX1 between the first illumination optical system 320 and the first detection optical system 330 in the first microscope part 310.

The second detection optical system 370 receives light from the sample SA in response to the irradiation with the second illumination light from the opposite side of the second illumination optical system 360 across the sample SA. The second detection optical system 370 has a detection second objective lens 371, an aperture stop 372, a second modulation element 373, a light-gathering lens 374, a mirror 376, and a relay lens 377 in order from the sample SA side, as shown in FIGS. 22 and 23. The detection second objective lens 371 is provided on the opposite side of the illumination second objective lens 367 across the sample SA. As the detection second objective lens 371, any one of a plurality of the detection second objective lenses 371 having different optical properties may be selected and be arranged above the stage 2. Light from the sample SA in response to the irradiation with the second illumination light enters the detection second objective lens 371.

The aperture stop 372 and the second modulation element 373 is arranged on a conjugated surface to the detection pupil of the detection second objective lens 371 in the second detection optical system 370 (on a surface perpendicular to the optical axis of the second microscope part 350 (second detection optical system 370) at a conjugated position P2A to the detection pupil). The second modulation element 373 is arranged neighboring to the aperture stop 372 (above the aperture stop 372 as shown in FIG. 23 by way of example). The second modulation element 373 is configured similarly to the second modulation element 77 according to the first embodiment. The light-gathering lens 374 gathers light having passed through the aperture stop 372 and the second modulation element 373. The mirror 376 reflects the light having transmitted through the light-gathering lens 374 toward the relay lens 377. The relay lens 377 causes the light reflected by the mirror 376 to enter the second detector 380.

The second detector 380 is arranged at the conjugated position P2B to the detection pupil in the second detection optical system 370. The second detector 380 is configured similarly to the second detector 80 according to the first embodiment. The second detector 380 detects light from the sample SA through the second detection optical system 370.

According to the fourth embodiment, when bright-field observation is performed on the sample SA, the first illumination light L1 emitted from the first light source 311 in the first microscope part 310 enters the collector lens 321 in the first illumination optical system 320. The first illumination light L1 having transmitted through the collector lens 321 becomes parallel light, passes through the aperture stop (not shown) and enters the relay lens 324. The first illumination light L1 having transmitted through the relay lens 324 passes through the first modulation element 325 and the aperture stop (not shown) and enters the condenser lens 327. The first illumination light L1 having transmitted through the condenser lens 327 becomes parallel light and is irradiated to the sample SA on the stage 2. Thus, the first illumination optical system 320 directs the first illumination light L1 emitted from the first light source 311 toward the +x direction (first direction) and irradiates the sample SA.

The first detection light having transmitted through the sample SA from the first illumination optical system 320 side enters the first objective lens 332 in the first detection optical system 330. The first detection light having transmitted through the first objective lens 332 enters the image-forming lens 336. The first detection light having transmitted through the image-forming lens 336 forms an image on a predetermined image surface I where the first detector 340 is placed. The first detector 340 detects the light (first detection light) from the sample SA through the first detection optical system 330 and outputs a detection signal for the light. The detection signal for the light (first detection light) output from the first detector 340 is sent to the image processing part 91 through the control part 90.

It should be noted that, in a case where bright-field observation is performed on the sample SA, a cylindrical lens (not shown) of the light source unit 351 in the second microscope part 350 is evacuated from the optical path between the first lens 353 in the light source unit 351 and the first galvano mirror 354. The second illumination light emitted from the second light source 352 in the light source unit 351 enters the first lens 353. The second illumination light having transmitted through the first lens 353 becomes parallel light and is reflected by the first galvano mirror 354. The second illumination light reflected by the first galvano mirror 354 transmits through the second lens 355 and the third lens 356 and is reflected by the second galvano mirror 357. The second illumination light reflected by the second galvano mirror 357 transmits through the fourth lens 358 and is emitted to an outside of the light source unit 351. Thus, the light source unit 351 emits the second illumination light.

The second illumination light L2 emitted from the light source unit 351 (second light source 352) is reflected by the mirror 361 in the second illumination optical system 360 and enters the collimator lens 362. The second illumination light L2 having transmitted through the collimator lens 362 becomes parallel light and enters the illumination second objective lens 367. The second illumination light L2 having transmitted through the illumination second objective lens 367 is gathered and is irradiated to the sample SA on the stage 2. Thus, the second illumination optical system 360 directs a second illumination light L2 emitted from the light source 351 (second light source 352) toward the +z direction (the second direction orthogonal to the first direction) and gathers light to and irradiates the sample SA.

The second detection light having transmitted through the sample SA from the second illumination optical system 360 side enters the detection second objective lens 371 in the second detection optical system 370. The second detection light having transmitted through the detection second objective lens 371 passes through the aperture stop 372 and the second modulation element 373 and enters the light-gathering lens 374. The second detection light having transmitted through the light-gathering lens 374 is reflected by the mirror 376 and enters the relay lens 377. The second detection light having transmitted through the relay lens 377 enters the second detector 380. The second detector 380 detects the light (second detection light) from the sample SA through the second detection optical system 370 and outputs a detection signal for the light. The detection signal for the light (second detection light) output from the second detector 380 is sent to the image processing part 91 through the control part 90.

Also, in a case where fluorescence observation is performed on the sample SA by the second microscope part 350, a cylindrical lens (not shown) of the light source unit 351 in the second microscope part 350 is inserted in the optical path between the first lens 353 in the light source unit 351 and the first galvano mirror 354.

The excited ray emitted from the light source unit 351 (second light source 352) is reflected by the mirror 361 in the second illumination optical system 360 and enters the collimator lens 362. The excited ray having transmitted through the collimator lens 362 becomes parallel light and enters the illumination second objective lens 367. The excited ray having transmitted through the illumination second objective lens 367 is gathered and is irradiated to the sample SA on the stage 2.

With the irradiation with the excited ray, a fluorescent material contained in the sample SA is excited, and fluorescence exits. The fluorescence from the sample SA enters the first objective lens 332 of the first detection optical system 330 in the first microscope part 310. The fluorescence having transmitted through the first objective lens 332 enters the image-forming lens 336. The fluorescence having transmitted through the image-forming lens 336 forms an image on a predetermined image surface I where the first detector 340 is placed. The first detector 340 detects the fluorescence from the sample SA through the first detection optical system 330 and outputs a detection signal for the fluorescence. The detection signal for the fluorescence output from the first detector 340 is sent to the image processing part 91 through the control part 90.

According to the fourth embodiment, a three-dimensional refractive index distribution on the sample SA (for example, image data on a three-dimensional refractive index distribution of the sample SA) can be generated in a manner similar to the method for generating data on a refractive index according to the first embodiment. Therefore, according to the fourth embodiment, the effect similar to that of the first embodiment can be achieved.

<Fifth Embodiment>

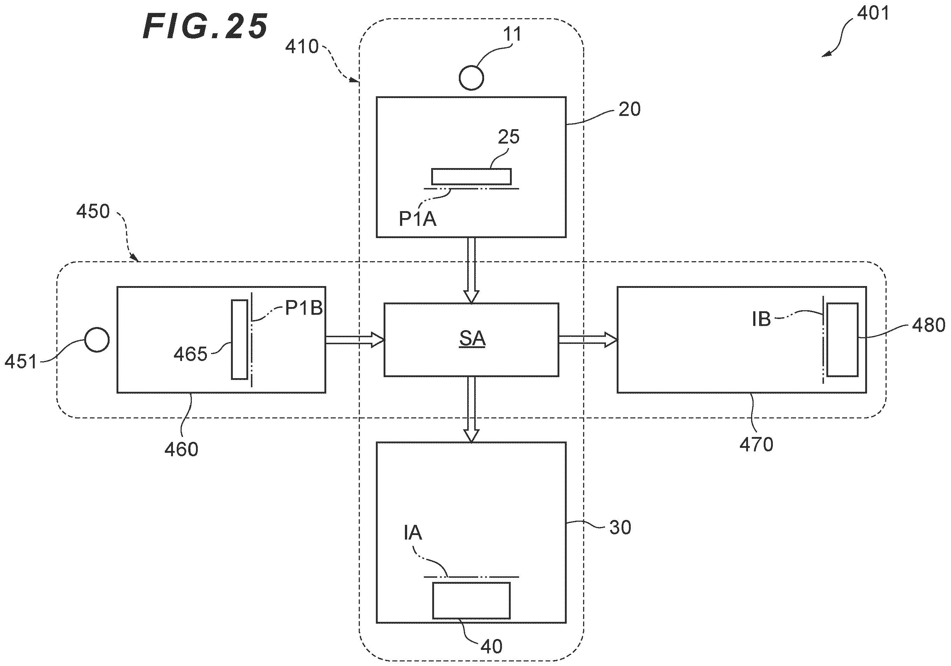

Next, with reference to FIG. 25, a microscope device 401 according to a fifth embodiment is described briefly. The microscope device 401 according to the fifth embodiment has the common configuration in the principal part to the microscope device 1 according to the first embodiment except for a second microscope part. Thus, like references are given to like components between the first embodiment and the fifth embodiment, and detailed descriptions are omitted. The microscope device 401 according to the fifth embodiment has a first microscope part 410 and a second microscope part 450. The microscope device 401 according to the fifth embodiment further has a stage, a control part, and an image processing part, which are not shown. The stage, the control part, and the image processing part are configured similarly to the stage 2, the control part 90, and the image processing part 91 according to the first embodiment.

The first microscope part 410 has a first light source 11, a first illumination optical system 20, a first detection optical system 30, and a first detector 40. The first light source 11, the first illumination optical system 20, the first detection optical system 30, and the first detector 40 are configured similarly to the first embodiment. It should be noted that a first modulation element 25 in the first illumination optical system 20 is arranged at a position P1A of the illumination pupil. A first detector 40 is arranged on a predetermined image surface I A.

The second microscope part 450 has a second light source 451, a second illumination optical system 460, a second detection optical system 470, and a second detector 480. The second light source 451 is configured similarly to the first light source 311 according to the fourth embodiment. The second illumination optical system 460 is configured similarly to the first illumination optical system 320 according to the fourth embodiment. It should be noted that the second modulation element 465 in the second illumination optical system 460 is configured similarly to the first modulation element 325 according to the fourth embodiment and is arranged at a position P1B of the illumination pupil. The second detection optical system 470 is configured similarly to the first detection optical system 330 according to the fourth embodiment. The second detector 480 is configured similarly to the first detector 340 according to the fourth embodiment and is arranged on a predetermined image surface IB.

According to the fifth embodiment, a three-dimensional refractive index distribution on the sample SA (for example, image data on a three-dimensional refractive index distribution of the sample SA) can be generated in a manner similar to the method for generating data on a refractive index according to the first embodiment. Therefore, according to the fifth embodiment, the effect similar to that of the first embodiment can be achieved.

<Sixth Embodiment>

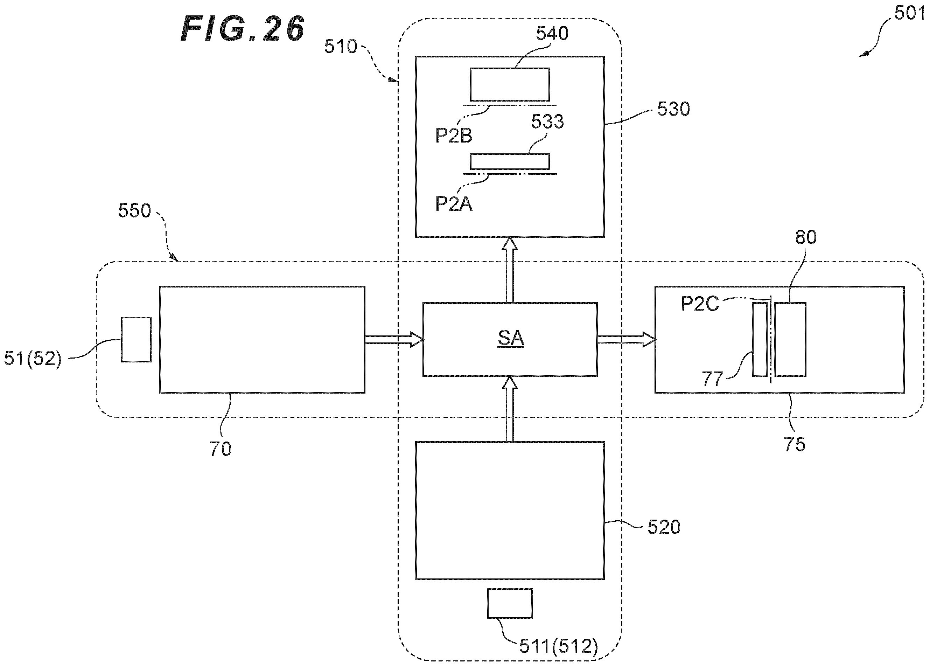

Next, with reference to FIG. 26, a microscope device 501 according to a sixth embodiment is described briefly. The microscope device 501 according to the sixth embodiment has the common configuration in the principal part to the microscope device 1 according to the first embodiment except for a first microscope part. Thus, like references are given to like components between the first embodiment and the sixth embodiment, and detailed descriptions are omitted. The microscope device 501 according to the sixth embodiment has a first microscope part 510 and a second microscope part 550. The microscope device 501 according to the sixth embodiment further has a stage, a control part, and an image processing part, which are not shown. The stage, the control part, and the image processing part are configured similarly to the stage 2, the control part 90, and the image processing part 91 according to the first embodiment.

The first microscope part 510 has a first light source unit 511 having a first light source 512, a first illumination optical system 520, a first detection optical system 530, and a first detector 540. The first light source unit 511 is configured similarly to the second light source unit 351 according to the fourth embodiment. The first illumination optical system 520 is configured similarly to the second illumination optical system 360 according to the fourth embodiment. The first detection optical system 530 is configured similarly to the second detection optical system 370 according to the fourth embodiment. It should be noted that the first modulation element 533 in the first detection optical system 530 is configured similarly to the second modulation element 373 according to the fourth embodiment and is arranged at a conjugated position P2A to the detection pupil. The first detector 540 is configured similarly to the second detector 380 according to the fourth embodiment and is arranged at a conjugated position P2B to the detection pupil.

The second microscope part 550 has a light source unit 51, a second illumination optical system 70, a second detection optical system 75, and a second detector 80. The light source unit 51, the second illumination optical system 70, the second detection optical system 75, and the second detector 80 are configured similarly to the first embodiment. It should be noted that a second modulation element 77 in the second detection optical system 75 is arranged at a conjugated position P2C to the detection pupil. The second detector 80 is also arranged at the conjugated position P2C to the detection pupil.

According to the sixth embodiment, a three-dimensional refractive index distribution on the sample SA (for example, image data on a three-dimensional refractive index distribution of the sample SA) can be generated in a manner similar to the method for generating data on a refractive index according to the first embodiment. Therefore, according to the sixth embodiment, the effect similar to that of the first embodiment can be achieved.

<Variation Examples>

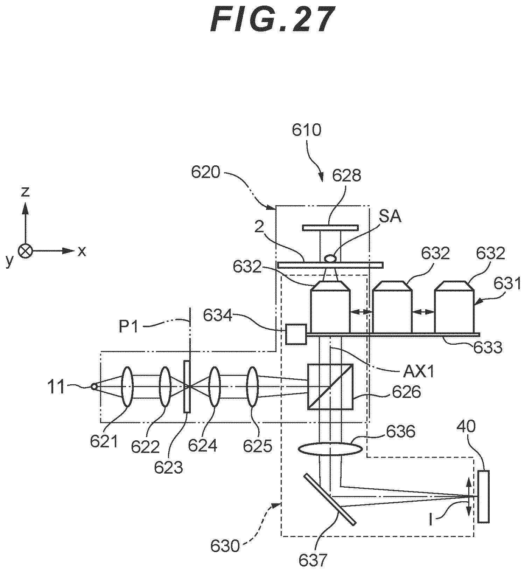

Although the first detection optical system 30, 130, 230 in the first microscope part 10, 110, 210 according to the aforementioned first to third embodiments is provided separately from the first illumination optical system 20, it is not limited thereto and may include a part of the first illumination optical system. For example, as shown in FIG. 27, the first microscope part 610 according to a variation example has a first light source 11, a first illumination optical system 620, a first detection optical system 630, and a first detector 40. The first light source 11 and the first detector 40 are configured similarly to the first embodiment.

The first illumination optical system 620 has, in order from the first light source 11 side, a collector lens 621, a first relay lens 622, a first modulation element 623, a second relay lens 624, a light-gathering lens 625, a half mirror 626, an objective lens unit 631, and an illumination mirror 628. It should be noted that, in a case where a white light source is used as the first light source 11, an element (such as a bandpass filter, for example) that narrows the wavelength band of the first illumination light may be provided like the first embodiment. The first modulation element 623 is arranged on a surface perpendicular to an optical axis AX1 of the first illumination optical system 620 at a position P1 of the illumination pupil between the first relay lens 622 and the second relay lens 624. The first modulation element 623 is configured similarly to the first modulation element 25 according to the first embodiment.

The half mirror 626 reflects a part of the first illumination light from the first light source 11 toward the stage 2. The half mirror 626 causes a part of light (first detection light) having transmitted through the sample SA on the stage 2 to transmit through toward the image-forming lens 636 in the detection optical system 630. The ratio of the transmittance and reflectivity of the half mirror 626 is set to 1:1, for example. The objective lens unit 631 has a plurality of first objective lenses 632, a lens holding part 633, and a unit drive part 634. The first objective lens 632 is arranged facing to a lower side of the stage 2. The lens holding part 633 holds the plurality of first objective lenses 632 having different focal lengths. The lens holding part 633 is formed by using a revolver, turret or the like, for example. The unit drive part 634 may drive the lens holding part 633 and select any one of the plurality of first objective lenses 632 and place it under the stage 2. The illumination mirror 628 is arranged facing to an upper side of the stage 2.

The first detection optical system 630 includes an objective lens unit 631 and a half mirror 626. The first detection optical system 630 further has, in order from the half mirror 626 side, an image-forming lens 636 and a mirror 637. The image-forming lens 636 and the mirror 637 are configured similarly to the image-forming lens 36 and the mirror 37 according to the first embodiment.

The first illumination light emitted from the first light source 11 in the first microscope part 610 enters the collector lens 621 in the first illumination optical system 620. The first illumination light having transmitted through the collector lens 621 becomes parallel light and enters the first relay lens 622. The first illumination light having transmitted through the first relay lens 622 enters the second relay lens 624 through the first modulation element 623. The first illumination light having transmitted through the second relay lens 624 enters the half mirror 626 through the light-gathering lens 625. A part of the first illumination light having entered the half mirror 626 is reflected by the half mirror 626 and enters the first objective lens 632. The first illumination light having transmitted through the first objective lens 632 transmits through the stage 2 and the sample SA and is reflected by the illumination mirror 628. The first illumination light reflected by the illumination mirror 628 is irradiated to the sample SA on the stage 2. Thus, the first illumination optical system 620 directs a first illumination light emitted from the first light source 11 toward the -z direction and irradiates the sample SA.

The first detection light reflected by the illumination mirror 628 and having transmitted through the sample SA enters the first objective lens 632 as the first detection optical system 630. The first detection light having transmitted through the first objective lens 632 enters the half mirror 626. A part of the first detection light having entered the half mirror 626 transmits through the half mirror 626 and enters the image-forming lens 636. The first detection light having transmitted through the image-forming lens 636 is reflected by the mirror 637 and forms an image on a predetermined image surface I where the first detector 40 is placed. The first detector 40 detects the light (first detection light) from the sample SA through the first detection optical system 630 and outputs a detection signal for the light.

Although, according to each of the aforementioned embodiments, the image processing part 91 acquires a three-dimensional refractive index distribution on the sample SA based on a detection signal for light detected under one detection condition relating to a light transmittance, the present invention is not limited thereto. The data processing part 91 may acquire a three-dimensional refractive index distribution on the sample SA based on the detection signal for the light detected under a plurality of detection conditions relating to a light transmittance. For example, the image processing part 91 acquires a linear sum or difference in POTF based on a detection signal for light detected under two detection conditions in accordance with user's settings or the like. Thus, an absolute value of a higher POTF can be acquired over a wide range of a frequency band than the case based on a detection signal for light detected under one detection condition in accordance with a user's setting or the like. Thus, an image of a three-dimensional refractive index distribution on the sample SA with both of a high contrast and a high resolution (resolving power) can be generated. It should be noted that the image processing part 91 can employ Expression (10) and Expression (11) above including a POTF to calculate a three-dimensional refractive index distribution n(x,y,z) on the sample SA.

For example, in the microscope devices according to the first to fourth embodiments, a first modulation element having a light transmittance that changes in accordance with a linear function (one-direction-changing first modulation element) in the example shown in FIG. 4 under a first detection condition is arranged at a position of the illumination pupil. Under a second detection condition, a first modulation element having a light transmittance that changes in the opposite direction (opposite-direction-changing first modulation element) of the one in the example shown in FIG. 4 (first detection condition) in accordance with a linear function is arranged at a position of the illumination pupil. In this variation example, a difference between the POTF based on the detection signal for light detected under the first detection condition and the POTF based on the detection signal for light detected under the second detection condition is acquired. Thus, since the value of the POTF under the first detection condition and the value of the POTF under the second detection condition have the opposite signs from each other, the absolute value of the POTF increases although the width of the frequency band in which the absolute value of the POTF is not equal to 0 does not change greatly. Therefore, an image of a three-dimensional refractive index distribution on the sample SA with excellent contrast can be generated.

Although, according to each of the aforementioned embodiments, the first modulation element and the second modulation element are illustrated by elements each formed by evaporating, to a parallel plate such as a glass substrate, a film that allows the light transmittance to be reduced as an element having a light transmittance changing within a surface of the plate, the present invention is not limited thereto. For example, at least one of the first modulation element and the second modulation element may be formed by a parallel plate such as a glass substrate having a fine dot pattern that allows the light transmittance to be reduced (having a light-shielding property). In this case, the light transmittance can be changed by forming the dot pattern such that coarseness and fineness are different on the parallel plate (glass substrate) by using existing lithography process or the like (the transmittance is lower in a region with a fine dot pattern compared to one in a region with a coarse dot pattern). At least one of the first modulation element and the second modulation element is not limited to the optical element as described above and may be composed of a spatial light modulator (SLM) such as a transmissive liquid crystal element, a reflective liquid crystal element, and a digital mirror device (DMD). In a case where an SLM is employed, the SLM is arranged at a position of a pupil (at least one of the illumination pupil and the detection pupil) or a conjugated position to the pupil, like the optical element in each of the aforementioned embodiments. For example, in a case where a transmissive liquid crystal element is employed as the SLM, a desired distribution of light transmittance can be set by controlling the transmittance of each pixel of the element. Also, in a case where a DMD is employed as the SLM, a desired distribution of light transmittance can be set by controlling the angle of each mirror.

It should be noted that, in a case where an optical element according to each of the aforementioned embodiments (that is, a plate having light permeability) is employed as the first modulation element, the control part 90 may control the element selection part so as to switch to one of a plurality of the first modulation elements and arrange it at the position of the illumination pupil so that the distribution of light transmittance within the surface of the illumination pupil is changed. In a case where an optical element according to each of the aforementioned embodiments (that is, a plate having light permeability) is employed as the second modulation element, the control part 90 may control the element selection part so as to switch to one of the plurality of second modulation elements and arrange it at the conjugated position to the detection pupil so that the distribution of light transmittance within the conjugated surface to the detection pupil is changed. In a case where the SLM is employed as the first modulation element and the second modulation element, the control part 90 controls the SLMs so that the distribution of light transmittance within the surface of the pupil or within the conjugated surface to the pupil is changed. Thus, since the distribution of light transmittance is changed by the control part 90, providing a plurality of elements and/or element section parts is not required.

In each of the aforementioned embodiments, the "lens" such as the collector lens 21 is described as one lens in each of the figures for convenience of illustration, but the present invention is not limited thereto. For example, the "lens" such as the collector lens 21 may be composed of a plurality of lenses and may be composed of a combination of a lens and an existing optical element other than a lens.

EXPLANATION OF NUMERALS AND CHARACTERS

| | |
|---|---|
| 1: | microscope device (first embodiment) |
| 2: | stage |
| 10: | first microscope part |
| 50: | second microscope part |
| 90: | control part |
| 91: | image processing part (data processing part) |
| 101: | microscope device (second embodiment) |
| 110: | first microscope part |
| 150: | second microscope part |
| 201: | microscope device (third embodiment) |
| 210: | first microscope part |
| 250: | second microscope part |
| 301: | microscope device (fourth embodiment) |
| 310: | first microscope part |
| 350: | second microscope part |
| 401: | microscope device (fifth embodiment) |
| 410: | first microscope part |
| 450: | second microscope part |
| 501: | microscope device (sixth embodiment) |
| 510: | first microscope part |
| 550: | second microscope part |

**EP 4 546 028 A1**

**Claims**

1.  A microscope device, comprising:

    a first microscope part that irradiates a sample with a first illumination light toward a first direction and detects light from the sample in response to the irradiation with the first illumination light;
    a second microscope part that irradiates the sample with a second illumination light toward a second direction and detects light from the sample in response to the irradiation with the second illumination light, the second direction being different from the first direction; and
    a data processing part that generates a three-dimensional refractive index distribution on the sample based on a detection signal for the light detected by the first microscope part and a detection signal for the light detected by the second microscope part.

2.  The microscope device according to claim 1, wherein:

    the first microscope part has a first illumination optical system that irradiates the sample with the first illumination light, a first detection optical system that receives light from the sample in response to the irradiation with the first illumination light, and a first detector that detects light from the sample via the first detection optical system and outputs a detection signal for the light;
    the second microscope part has a second illumination optical system that irradiates the sample with the second illumination light, a second detection optical system that receives light from the sample in response to the irradiation with the second illumination light, and a second detector that detects light from the sample via the second detection optical system and outputs a detection signal for the light; and
    the data processing part generates a three-dimensional refractive index distribution on the sample based on the detection signal for the light output from the first detector and the detection signal for the light output from the second detector.

3.  The microscope device according to claim 2, wherein:

    the second direction is a direction orthogonal to the first direction; and
    an optical axis between the second illumination optical system and the second detection optical system is orthogonal to an optical axis between the first illumination optical system and the first detection optical system.

4.  The microscope device according to claim 2 or 3, wherein:

    the first microscope part has a first light source that is provided at a conjugated position to a pupil in the first illumination optical system and emits the first illumination light, and the first illumination optical system irradiates toward the first direction the sample with the first illumination light emitted from the first light source;
    the second microscope part has a second light source that emits the second illumination light, and the second illumination optical system gathers toward the second direction the second illumination light emitted from the second light source and irradiates the sample;
    the first illumination optical system has a first modulation element that is provided at a position of the pupil in the first illumination optical system or a conjugated position to the pupil and that exhibits light transmittance that changes within a surface of the pupil or within a conjugated surface to the pupil;
    the first detector is provided at a conjugated position to the sample in the first detection optical system;
    the second detection optical system has a second modulation element that is provided at a position of the pupil in the second detection optical system or a conjugated position to the pupil and that exhibits light transmittance that changes within a surface of the pupil or within a conjugated surface to the pupil; and
    the second detector is provided at a conjugated position to the pupil in the second detection optical system.

5.  The microscope device according to claim 4, wherein:

    the first detection optical system has a first objective lens that receives light from the sample in response to the irradiation with the first illumination light;
    the second illumination optical system has an illumination second objective lens that gathers the second illumination light emitted from the second light source; and
    the second detection optical system has a detection second objective lens that is provided on the opposite side of the illumination second objective lens across the sample and that receives light from the sample in response to the irradiation with the second illumination light.

6. The microscope device according to claim 4, wherein:

the first detection optical system has a first objective lens that receives light from the sample in response to the irradiation with the first illumination light;
the second illumination optical system includes the first objective lens;

the objective lens gathers the second illumination light emitted from the second light source; and
the second illumination optical system has an illumination mirror that reflects toward the second direction the second illumination light from the first objective lens.

7. The microscope device according to claim 6, wherein:
the second detection optical system has a detection second objective lens that is provided on the opposite side of the illumination mirror across the sample and that receives light from the sample in response to the irradiation with the second illumination light.

8. The microscope device according to claim 6, wherein:

the second detection optical system includes the first objective lens and has a detection mirror that is provided on the opposite side of the illumination mirror across the sample and that reflects toward the first objective lens light from the sample in response to the irradiation with the second illumination light; and
the first objective lens receives light from the sample in response to the irradiation with the second illumination light via the detection mirror.

9. The microscope device according to claim 2 or 3, wherein:

the first microscope part has a first light source that is provided at a conjugated position to a pupil in the first illumination optical system and emits light, and the first illumination optical system irradiates toward the first direction the sample with the first illumination light emitted from the first light source;
the second microscope part has a second light source that is provided at a conjugated position to a pupil in the second illumination optical system and emits light, and the second illumination optical system irradiates toward the second direction the sample with the second illumination light emitted from the second light source;
the first illumination optical system has a first modulation element that is provided at a position of the pupil in the first illumination optical system or a conjugated position to the pupil and that exhibits light transmittance that changes within a surface of the pupil or within a conjugated surface to the pupil;
the first detector is provided at a conjugated position to the sample in the first detection optical system;
the second illumination optical system has a second modulation element that is provided at a position of the pupil in the second illumination optical system or a conjugated position to the pupil and that exhibits light transmittance that changes within a surface of the pupil or within a conjugated surface to the pupil; and
the second detector is provided at a conjugated position to the sample in the second detection optical system.

10. The microscope device according to claim 2 or 3, wherein:

the first microscope part has a first light source that emits light, and the first illumination optical system gathers toward the first direction the first illumination light emitted from the first light source and irradiates the sample;
the second microscope part has a second light source that emits light, and the second illumination optical system gathers toward the second direction the second illumination light emitted from the second light source and irradiates the sample;
the first detection optical system has a first modulation element that is provided at a position of the pupil in the first detection optical system or a conjugated position to the pupil and that exhibits light transmittance that changes within a surface of the pupil or within a conjugated surface to the pupil; and
the first detector is provided at a conjugated position to the pupil in the first detection optical system;
the second detection optical system has a second modulation element that is provided at a position of the pupil in the second detection optical system or a conjugated position to the pupil and that exhibits light transmittance that changes within a surface of the pupil or within a conjugated surface to the pupil; and
the second detector is provided at a conjugated position to the pupil in the second detection optical system.

11. The microscope device according to any one of claims 4 to 10, wherein:
the light transmittance of at least one of the first modulation element and the second modulation element changes along one direction within a surface of the pupil or within a conjugated surface to the pupil in accordance with a continuous function.

12. The microscope device according to claim 11, wherein:
the light transmittance of at least one of the first modulation element and the second modulation element monotonously increases or decreases along one direction within a surface of the pupil or within a conjugated surface to the pupil in accordance with the continuous function, and is equal to zero in a part of an outer circumference within the surface of the pupil or within the conjugated surface to the pupil.

13. The microscope device according to claim 12, wherein:
the continuous function is any function of a linear function, a quadratic function, a Gaussian function, a sine function in a range less than one cycle, and a cosine function in a range less than one cycle.

14. The microscope device according to any one of claims 11 to 13, wherein:

the first modulation element includes a plurality of first modulation elements having different distributions of light transmittance; and
the microscope device comprises a switching control part that performs control so as to switch to any one of the plurality of first modulation elements to be arranged within the surface of the pupil or within the conjugated surface to the pupil.

15. The microscope device according to any one of claims 11 to 14, wherein:

the second modulation element includes a plurality of second modulation elements having different distributions of light transmittance; and
the microscope device comprises a switching control part that performs control so as to switch to any one of the plurality of second modulation elements to be arranged within the surface of the pupil or within the conjugated surface to the pupil.

16. The microscope device according to any one of claims 11 to 15, wherein:

at least one of the first modulation element and the second modulation element is a plate that has translucency and has a light transmittance changing in accordance with the continuous function;
the plate has a dot pattern allowing to reduce the light transmittance; and
depending on coarseness and fineness of the dot pattern, the light transmittance of the plate changes in accordance with the continuous function.

17. The microscope device according to any one of claims 11 to 15, wherein:

at least one of the first modulation element and the second modulation element is a spatial light modulator that can change the distribution of the light transmittance changing in accordance with the continuous function;
the spatial light modulator includes a transmissive liquid crystal element, reflective liquid crystal element, or a digital mirror device; and
the microscope device comprises a modulator control part that performs control so as to cause the spatial light modulator to change the distribution of the light transmittance.

18. The microscope device according to any one of claims 4 to 9, wherein:

the first modulation element includes a one-direction-changing first modulation element that changes a light transmittance along one direction within a surface of the pupil or a conjugated surface to the pupil in the first illumination optical system in accordance with a continuous function and an opposite-direction-changing first modulation element that changes a light transmittance along the opposite direction to the one direction within the surface of the pupil or the conjugated surface to the pupil in the first illumination optical system in accordance with a continuous function and can switch to the one-direction-changing first modulation element or the opposite-direction-changing first modulation element to be arranged within a surface of a pupil or within a conjugated surface to the pupil in the first illumination optical system; and

the data processing part generates a three-dimensional refractive index distribution on the sample based on a detection signal for light output from the first detector in a state where the one-direction-changing first modulation element is arranged within a surface of a pupil or within a conjugated surface to the pupil in the first illumination optical system and a detection signal for light output from the first detector in a state where the opposite-direction-changing first modulation element is arranged within the surface of the pupil or within the conjugated surface to the pupil in the first illumination optical system.

19. The microscope device according to any one of claims 2 to 18, wherein:

the first detector detects light from a plurality of detection positions that are different in position in an optical axis direction in the sample and outputs a detection signal for the light; and
the data processing part generates a three-dimensional refractive index distribution on the sample based on the detection signal for the light from the plurality of detection positions, the detection signal being output from the first detector.

20. A data generation method, comprising:

irradiating a sample with a first illumination light toward a first direction and detecting light from the sample in response to the irradiation with the first illumination light;
irradiating the sample with a second illumination light toward a second direction and detecting light from the sample in response to the irradiation with the second illumination light, the second direction being different from the first direction; and
generating a three-dimensional refractive index distribution on the sample based on a detection signal for light from the sample in response to the irradiation with the first illumination light and a detection signal for light from the sample in response to the irradiation with the second illumination light.

21. The data generation method according to claim 20, comprising:

irradiating the sample with the first illumination light by using a first illumination optical system;
receiving light from the sample in response to the irradiation with the first illumination light by using a first detection optical system;
detecting light from the sample through the first detection optical system and outputting a detection signal for the light by using a first detector;
irradiating the sample with the second illumination light by using a second illumination optical system;
receiving light from the sample in response to the irradiation with the second illumination light by using a second detection optical system;
detecting light from the sample through the second detection optical system and outputting a detection signal for the light by using a second detector; and
generating a three-dimensional refractive index distribution on the sample based on the detection signal for the light output from the first detector and the detection signal for the light output from the second detector.

22. The data generation method according to claim 21, wherein:

the second direction is a direction orthogonal to the first direction; and
an optical axis between the second illumination optical system and the second detection optical system is orthogonal to an optical axis between the first illumination optical system and the first detection optical system.

**FIG.1**

# FIG.2

# FIG.3

# FIG.4

# FIG.5

$I(x,y,z)$

$I_6$
$I_5$
$I_4$
$I_3$
$I_2$
$I_1$

SA

z
y
x

(DECONVOLUTION)

$n(x,y,z)$

SA

# FIG.6

# FIG.7

# FIG.8

# FIG.9

# FIG.10

FIG.11

# FIG.12

# FIG.13

# FIG.14

```
        ┌─────────┐
        │  START  │
        └─────────┘
             │
             ▼
   ┌──────────────────┐
   │ IRRADIATE FIRST  │──── ST1
   │ ILLUMINATION LIGHT│
   └──────────────────┘
             │
             ▼
   ┌──────────────────┐
   │ RECEIVE LIGHT FROM│
   │ SAMPLE IN RESPONSE│
   │ TO IRRADIATION WITH│── ST2
   │ FIRST ILLUMINATION│
   │      LIGHT        │
   └──────────────────┘
             │
             ▼
   ┌──────────────────┐
   │ OUTPUT DETECTION │
   │ SIGNAL FOR LIGHT │──── ST3
   │  FROM SAMPLE     │
   └──────────────────┘
             │
             ▼
   ┌──────────────────┐
   │ IRRADIATE SECOND │──── ST4
   │ ILLUMINATION LIGHT│
   └──────────────────┘
             │
             ▼
   ┌──────────────────┐
   │ RECEIVE LIGHT FROM│
   │ SAMPLE IN RESPONSE│
   │ TO IRRADIATION WITH│── ST5
   │ SECOND ILLUMINATION│
   │      LIGHT        │
   └──────────────────┘
             │
             ▼
   ┌──────────────────┐
   │ OUTPUT DETECTION │
   │ SIGNAL FOR LIGHT │──── ST6
   │  FROM SAMPLE     │
   └──────────────────┘
             │
             ▼
   ┌──────────────────┐
   │ GENERATE THREE-  │
   │  DIMENSIONAL     │
   │ REFRACTIVE INDEX │──── ST7
   │ DISTRIBUTION ON  │
   │     SAMPLE       │
   └──────────────────┘
             │
             ▼
        ┌─────────┐
        │   END   │
        └─────────┘
```

# FIG.15

# FIG.16

# FIG.17

# FIG.18

# FIG.19

# FIG.20

# FIG.21

**FIG.22**

EP 4 546 028 A1

# FIG.23

# FIG.24

**FIG.25**

EP 4 546 028 A1

**FIG.26**

# FIG.27

## INTERNATIONAL SEARCH REPORT

International application No.

**PCT/JP2022/025272**

### A. CLASSIFICATION OF SUBJECT MATTER

*G02B 21/00*(2006.01)i
FI: G02B21/00

According to International Patent Classification (IPC) or to both national classification and IPC

### B. FIELDS SEARCHED

Minimum documentation searched (classification system followed by classification symbols)

G02B21/00-21/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2021/064807 A1 (NIKON CORP) 08 April 2021 (2021-04-08) paragraphs [0001], [0008]-[0239], fig. 1-27 | 1-3, 19-22 |
| A | | 4-18 |
| Y | JP 2015-161675 A (UNIV CHIBA) 07 September 2015 (2015-09-07) paragraphs [0013]-[0045], fig. 1-5 | 1-3, 19-22 |
| A | | 4-18 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **02 September 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/025272**

| Patent document cited in search report | | | Publication date (day/month/year) | Patent family member(s) | Publication date (day/month/year) |
|---|---|---|---|---|---|
| WO | 2021/064807 | A1 | 08 April 2021 | US 2022/0244516 A1 paragraphs [0002], [0035]-[0237], fig. 1-27 | |
| JP | 2015-161675 | A | 07 September 2015 | (Family: none) | |

Form PCT/ISA/210 (patent family annex) (January 2015)

**EP 4 546 028 A1**

## REFERENCES CITED IN THE DESCRIPTION

**Patent documents cited in the description**

- WO 2020161826 A

- WO 2021064807 A